(19) Europäisches Patentamt / European Patent Office / Office européen des brevets

(11) **EP 4 207 660 A1**

(12) **EUROPEAN PATENT APPLICATION**
published in accordance with Art. 153(4) EPC

(43) Date of publication:
**05.07.2023 Bulletin 2023/27**

(21) Application number: **21862117.5**

(22) Date of filing: **27.08.2021**

(51) International Patent Classification (IPC):
*H04L 5/00* (2006.01)          *H04L 1/08* (2006.01)
*H04L 1/00* (2006.01)          *H04W 72/04* (2023.01)
*H04W 72/12* (2023.01)

(52) Cooperative Patent Classification (CPC):
**H04L 1/00; H04L 1/08; H04L 5/00; H04W 72/04;
H04W 72/12**

(86) International application number:
**PCT/KR2021/011503**

(87) International publication number:
**WO 2022/045821 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.08.2020   KR 20200108252**
**03.09.2020   KR 20200112237**

(71) Applicant: **LG Electronics Inc.**
**Yeongdeungpo-gu**
**Seoul, 07336 (KR)**

(72) Inventors:
• **YOU, Hyangsun**
**Seoul 06772 (KR)**
• **KO, Hyunsoo**
**Seoul 06772 (KR)**
• **KIM, Kyuseok**
**Seoul 06772 (KR)**

(74) Representative: **Mooser, Sebastian Thomas
Wuesthoff & Wuesthoff
Patentanwälte PartG mbB
Schweigerstraße 2
81541 München (DE)**

(54) **OPERATION METHOD OF TERMINAL IN WIRELESS COMMUNICATION SYSTEM AND APPARATUS USING SAME**

(57) Provided are an apparatus and an operation method of a device in a wireless communication system. The method comprises: carrying out an initial access procedure with a base station; receiving, from the base station, DMRS symbol information informing about the position of a DMRS symbol in each repetition interval of PUSCH repetitive transmission; allocating a DMRS in each of the repetition intervals on the basis of the DMRS symbol information; and carrying out the PUSCH repetitive transmission for the base station.

FIG. 17

- Performing an initial access procedure with the base station — S171
- Receiving DMRS symbol information indicating the position of a demodulation reference signal (DMRS) symbol in each repetition duration of repeated physical uplink shared channel (PUSCH) transmission from the base station — S172
- Allocating a DMRS in each repetition duration based on the DMRS symbol information — S173
- Performing the repeated transmission of the PUSCH to the base station — S174

**Description**

**BACKGROUNDS**

Field of the description

The present disclosure relates to a method of operating a terminal in a wireless communication system and an apparatus using the method.

Related Art

As a growing number of communication devices require higher communication capacity, there is a need for advanced mobile broadband communication as compared to existing radio access technology (RAT). Massive machine-type communication (MTC), which provides a variety of services anytime and anywhere by connecting a plurality of devices and a plurality of objects, is also one major issue to be considered in next-generation communication. In addition, designs for communication systems considering services or a user equipment (UE) sensitive to reliability and latency are under discussion. Introduction of next-generation RAT considering enhanced mobile broadband communication, massive MTC, and ultra-reliable and low-latency communication (URLLC) is under discussion. In this disclosure, for convenience of description, this technology may be referred to as new RAT or new radio (NR).

In NR, repeated transmission of a physical uplink shared channel (PUSCH) is supported. For repeated PUSCH transmission, there are a PUSCH repetition type A having the same PUSCH transmission start symbol and PUSCH symbol length (meaning the number of symbols) and a PUSCH repetition type B in which repetitions are set in units of symbol lengths (number of symbols) in which PUSCHs are actually transmitted. However, when one PUSCH transmission includes a slot boundary in PUSCH repetition type B, two PUSCH repetitions are performed based on the slot boundary.

Meanwhile, in repeated PUSCH transmissions, the location and number of existing demodulation reference signals (DMRSs) vary according to the symbol length (number of symbols) of each PUSCH actually transmitted. In particular, when PUSCH repetition type B is used, the symbol length of each PUSCH may be different. In this case, the location of a DMRS may be different for each PUSCH. Then, the same resource element mapping cannot be used in repeatedly transmitted PUSCHs, and as a result, it is difficult to obtain an energy combining gain by receiving the PUSCHs. It may also be necessary to address this problem in terms of coverage enhancement.

**SUMMARY**

The technical problem to be solved by the present disclosure is to provide a method of operating a user equipment (UE) and an apparatus using the method.

In one aspect, provided is a method of operating a user equipment, UE, in a wireless communication system. The method includes performing an initial access procedure with a base station, receiving, from the base station, demodulation reference signal, DMRS, symbol information informing of a location of a DMRS symbol in each repetition duration of repeated physical uplink shared channel, PUSCH, transmission, allocating a DMRS in the each repetition duration based on the DMRS symbol information and performing the repeated PUSCH transmission to the base station.

In another aspect, provided is a user equipment, UE. The UE includes a transceiver, at least one memory and at least one processor operably coupled with the at least one memory and the transceiver. The processor is adapted to: perform an initial access procedure with a base station, receive, from the base station, demodulation reference signal, DMRS, symbol information informing of a location of a DMRS symbol in each repetition duration of repeated physical uplink shared channel, PUSCH, transmission, allocate a DMRS in the each repetition duration based on the DMRS symbol information and perform the repeated PUSCH transmission to the base station.

In still another aspect, provides is an apparatus comprising at least one memory and at least one processor operably coupled with the at least one memory. The at least one processor is adapted to: perform an initial access procedure with a base station, receive, from the base station, demodulation reference signal, DMRS, symbol information informing of a location of a DMRS symbol in each repetition duration of repeated physical uplink shared channel, PUSCH, transmission, allocate a DMRS in the each repetition duration based on the DMRS symbol information and perform the repeated PUSCH transmission to the base station.

In still another aspect, provided is at least one computer-readable medium (CRM) comprising an instruction based on being executed by at least one processor. The CRM performs below steps: performing an initial access procedure with a base station, receiving, from the base station, demodulation reference signal, DMRS, symbol information informing of a location of a DMRS symbol in each repetition duration of repeated physical uplink shared channel, PUSCH, transmission, allocating a DMRS in the each repetition duration based on the DMRS symbol information and performing the repeated PUSCH transmission to the base station.

In still another aspect, provided is a method of operating a base station in a wireless communication system. The method includes performing an initial access procedure with a user equipment, UE, transmitting, to the UE, demodulation reference signal, DMRS, symbol information informing of a location of a DMRS symbol in each repetition duration of repeated physical uplink shared channel, PUSCH, transmission and receiving, from the UE, the repeated PUSCH transmission including a DMRS allocated in the each repetition duration based on the DMRS symbol information

In still another aspect, provided is a base station comprising a transceiver, at least one memory and at least one processor operably coupled with the at least one memory and the transceiver. The at least one processor is adapted to: transmit, to a user equipment, UE, demodulation reference signal, DMRS, symbol information informing of a location of a DMRS symbol in each repetition duration of repeated physical uplink shared channel, PUSCH, transmission and receive, from the LTE, the repeated PUSCH transmission including a DMRS allocated in the each repetition duration based on the DMRS symbol information

In repeated PUSCH transmission, even if the symbol length (number of symbols) of each PUSCH is different, the location and number of DMRSs can be set/allocated as the same as possible. As a result, it is easy to use the same resource element mapping in repeatedly transmitted PUSCHs and it is easy to obtain an energy combining gain. As a result, it is possible to improve coverage in uplink channel transmission of the UE.

## BRIEF DESCRIPTION OF THE DRAWINGS

FIG. 1 illustrates a system structure of a New Generation Radio Access Network (NG-RAN) to which NR is applied.

FIG. 2 illustrates a frame structure that can be applied in NR.

FIG. 3 illustrates the slot structure of an NR frame.

FIG. 4 illustrates the structure of a self-contained slot.

FIG. 5 illustrates physical channels and general signal transmission.

FIG. 6 illustrates PUSCH repetition type A.

FIG. 7 illustrates PUSCH repetition type B.

FIG. 8 illustrates the location of symbols of a front load DMRS and an additional DMRS according to data symbol length.

FIG. 9 shows an example in which the number and location of DMRSs between actual repetitions are different when the symbol lengths between actual repetitions are different.

FIG. 10 illustrates an example in which a LTE performs PUSCH TB mapping on resources constituting actual repetitions existing within the same nominal repetition resource.

FIG. 11 and FIG. 12 are examples in which one PUSCH TB mapping is performed based on symbols constituting one nominal repetition and DMRS resources, and PUSCH transmission is not performed on invalid symbols not included in the actual repetition.

FIG. 13 shows an example of performing PUSCH repetition using PUSCH repetition type B.

FIG. 14 shows an example in which the number and location of DMRS symbols vary for each actual repetition.

FIG. 15 illustrates examples of PUSCH repetition resources.

FIG. 16 shows other examples of PUSCH repetition resources.

FIG. 17 illustrates a method of operating a UE in a wireless communication system according to an embodiment of the present disclosure.

FIG. 18 shows an example of DMRS allocation based on method a.

FIG. 19 shows examples of locations of DMRS when PUSCH repetition type B is applied.

FIG. 20 shows an example in which the DMRS is located at the same symbol location in nominal repetitions.

FIG. 21 shows an example of a DMRS location in each PUSCH repetition resource when applying the existing PUSCH repetition type A.

FIG. 22 illustrates a method of operating a base station and a UE related to repeated PUSCH transmission in a wireless communication system.

FIG. 23 schematically illustrates an example of SB-FD and SS-FD.

FIG. 24 schematically illustrates an example in which time resources operating in half duplex (HD) and time resources operating in full duplex (FD) such as SB-FD or SS-FD coexist.

FIG. 25 illustrates a wireless device applicable to this specification.

FIG. 26 shows another example of a wireless device.

FIG. 27 illustrates an example of a structure of a signal processing module.

FIG. 28 illustrates another example of a structure of a signal processing module in a transmission device.

FIG. 29 illustrates an example of a wireless communication device according to an implementation example of the present disclosure.

FIG. 30 illustrates a communication system 1 applied to this specification.

**DESCRIPTION OF EXEMPLARY EMBODIMENTS**

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

The following drawings are made to explain a specific example of the present specification. Since the names of specific devices or names of specific signals/messages/fields described in the drawings are provided as examples, the technical features of the present specification are not limited to the specific names used in the drawings below.

An existing wireless communication system may also be called an Evolved-UMTS Terrestrial Radio Access Network (E-UTRAN) or a Long Term Evolution (LTE)/LTE-A system.

The E-UTRAN includes at least one base station (BS) which provides a control plane and a user plane to a user equipment (UE). The UE may be fixed or mobile, and may be referred to as another terminology, such as a mobile station (MS), a user terminal (UT), a subscriber station (SS), a mobile terminal (MT), a wireless device, etc. The BS is generally a fixed station that communicates with the LTE and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC), more specifically, to a mobility management entity (MME) through S1-MME and to a serving gateway (S-GW) through S1-U.

The EPC includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The user plane is a protocol stack for user data transmission. The control plane is a protocol stack for control signal transmission.

A PHY layer provides an upper layer with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to LTE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. TTI (Transmission Time Interval) is a unit time of subframe transmission.

Hereinafter, new radio access technology (new RAT, NR) will be described.

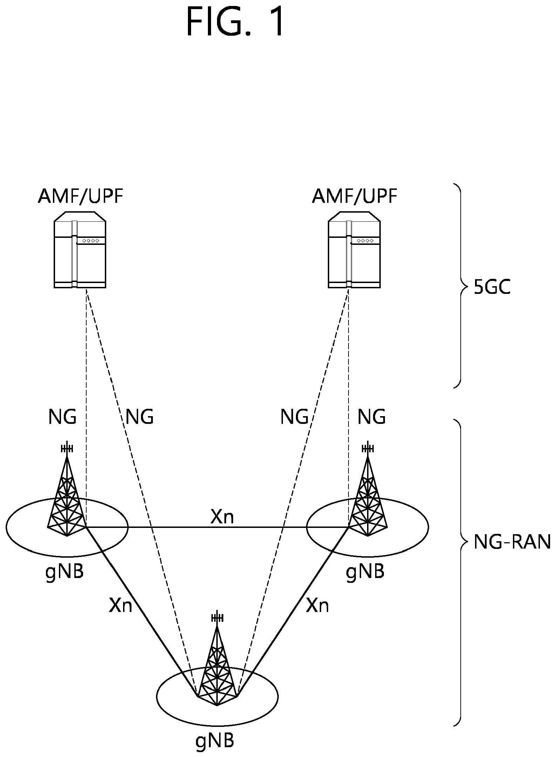

FIG. 1 illustrates a system structure of a New Generation Radio Access Network (NG-RAN) to which NR is applied.

Referring to FIG. 1, an NG-RAN may include a gNB and/or an eNB that provides user plane and control plane protocol termination to a LTE. FIG. 1 illustrates a case including only gNB. gNB and eNB are connected to each other through an Xn interface. The gNB and the eNB are connected to a 5G Core Network (5GC) through an NG interface. More specifically, an access and mobility management function (AMF) is connected through an NG-C interface, and a user plane function (UPF) is connected through an NG-U interface.

The gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as LTE IP address assignment, PDU session control, and so on.

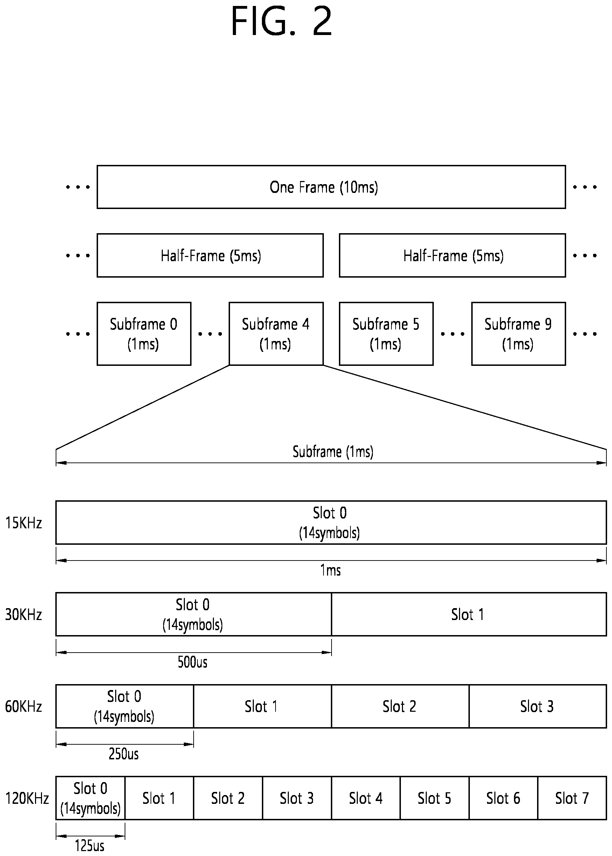

FIG. 2 illustrates an example of a frame structure that may be applied in NR.

Referring to FIG. 2, a radio frame (which may be called as a frame hereinafter) may be used for uplink and downlink transmission in NR. A frame has a length of 10 ms and may be defined as two 5 ms half-frames (Half-Frame, HF). A half-frame may be defined as five 1 ms subframes (Subframe, SF). A subframe may be divided into one or more slots, and the number of slots in a subframe depends on subcarrier spacing (SCS). Each slot includes 12 or 14 OFDM(A) symbols according to a cyclic prefix (CP). When a normal CP is used, each slot includes 14 symbols. When an extended CP is used, each slot includes 12 symbols. Here, the symbol may include an OFDM symbol (or a CP-OFDM symbol) and an SC-FDMA symbol (or a DFT-s-OFDM symbol).

Table 1 below illustrates subcarrier spacing configuration $\mu$.

[Table 1]

| μ | Δf = $2^{\mu} \cdot 15$ [kHz] | Cyclic prefix |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations μ.

[Table 2]

| μ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

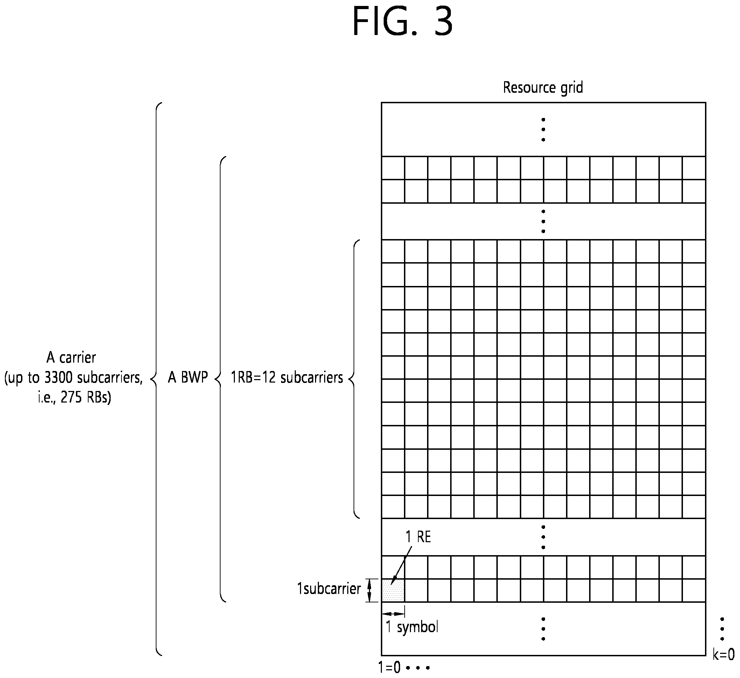

In FIG. 3, μ=0, 1, 2, and 3 are exemplified.

Table 2-1 below exemplifies that the number of symbols per slot, the number of slots per frame, and the number of slots per subframe vary according to SCS when the extended CP is used.

[Table 2-1]

| μ | $N^{slot}_{symb}$ | $N^{frame,u}_{slot}$ | $N^{subframe,u}_{slot}$ |
|---|---|---|---|
| 2 | 12 | 40 | 4 |

In an NR system, OFDM(A) numerologies (e.g., SCS, CP length, and so on) may be differently configured between a plurality of cells integrated to one LTE. Accordingly, an (absolute time) duration of a time resource (e.g., SF, slot or TTI) (for convenience, collectively referred to as a time unit (TU)) configured of the same number of symbols may be differently configured between the integrated cells.

FIG. 3 illustrates a slot structure of a NR frame.

A slot may comprise a plurality of symbols in a time domain. For example, in case of a normal CP, one slot may include 14 symbols. However, in case of an extended CP, one slot may include 12 symbols. The carrier may include a plurality of subcarriers in a frequency domain. A resource block (RB) may be defined as a plurality of consecutive subcarriers (e.g., 12) in the frequency domain. A bandwidth part (BWP) may be defined as a plurality of consecutive (P)RBs in the frequency domain, and may correspond to one numerology (e.g., SCS, CP length, etc.). A carrier may include a maximum of N (e.g., 5) BWPs. Data communication is performed through the activated BWP, and only one BWP can be activated for one UE. Each element in the resource grid is referred to as a resource element (RE), and one complex symbol may be mapped thereto.

A physical downlink control channel (PDCCH) may include one or more control channel elements (CCEs) as illustrated in the following table 3.

[Table 3]

| Aggregation level | Number of CCEs |
|---|---|
| 1 | 1 |

(continued)

| Aggregation level | Number of CCEs |
|---|---|
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring means decoding each PDCCH candidate according to a downlink control information (DCI) format. The UE monitors a set of PDCCH candidates in one or more CORESETs (described below) on the activated DL BWP of each activated serving cell for which PDCCH monitoring is configured according to a corresponding search space set.

A new unit called a control resource set (CORESET) may be introduced in the NR. The LTE may receive a PDCCH in the CORESET. The CORESET includes $N^{CORESET}_{RB}$ resource blocks in the frequency domain, and $N^{CORESET}_{symb} \in \{1, 2, 3\}$ number of symbols in the time domain. $N^{CORESET}_{RB}$ and $N^{CORESET}_{symb}$ may be provided by a base station via higher layer signaling. A plurality of CCEs (or REGs) may be included in the CORESET. The UE may attempt to detect a PDCCH in units of 1, 2, 4, 8, or 16 CCEs in the CORESET. One or a plurality of CCEs in which PDCCH detection may be attempted may be referred to as PDCCH candidates. A plurality of CORESETs may be configured for the UE.

CORESETs are radio resources for control information to be received by the UE and may use only a portion, rather than the entirety of the system bandwidth in the frequency domain. In addition, in the time domain, only some of the symbols in the slot may be used. The BS may allocate the CORESET to each UE and may transmit control information through the allocated CORESET. A UE in NR can receive control information of a base station even if it does not necessarily receive the entire system band. The CORESET may include a LTE-specific CORESET for transmitting LTE-specific control information and a common CORESET for transmitting control information common to all UEs.

<Self-contained subframe structure>

In NR, a structure in which a control channel and a data channel are time-division-multiplexed within one TTI can be considered as a frame structure in order to minimize latency.

Both a downlink control region and an uplink control region may be included in one frame/subframe/slot. Also, between the downlink control region and the uplink control region, it may be used for downlink data (DL data) transmission or uplink data (UL data) transmission. For example, DL transmission and UL transmission are sequentially performed within one subframe and thus DL data can be transmitted and UL ACK/NACK (Acknowledgement/negative-acknowledgement) can be received within the subframe. Consequently, a time required from occurrence of a data transmission error to data retransmission is reduced, thereby minimizing latency in final data transmission.

In this data and control TDMed subframe structure, a time gap for a base station and a LTE to switch from a transmission mode to a reception mode or from the reception mode to the transmission mode may be required. To this end, some OFDM symbols at a time when DL switches to UL may be set to a guard period (GP) in the self-contained subframe structure.

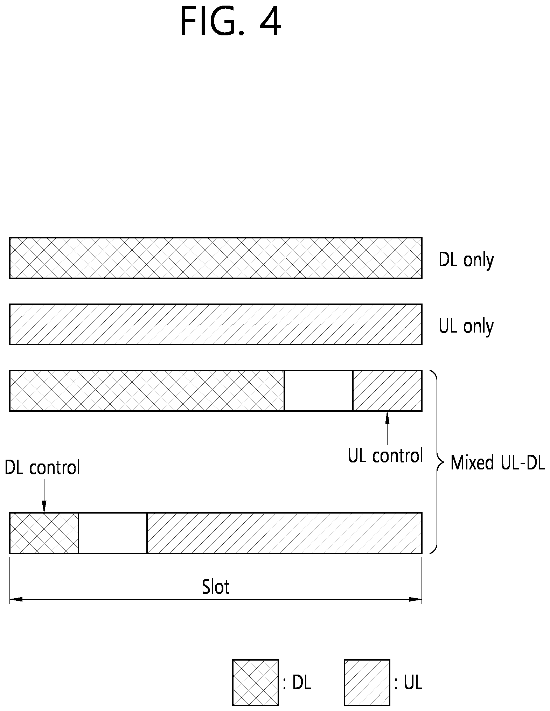

FIG. 4 illustrates a structure of self-contained slot.

In NR system, one slot includes all of a DL control channel, DL or UL data channel, UL control channel, and so on. For example, the first N symbols in a slot may be used for transmitting a DL control channel (in what follows, DL control region), and the last M symbols in the slot may be used for transmitting an LTL control channel (in what follows, UL control region). N and M are each an integer of 0 or larger. A resource region located between the DL and UL control regions (in what follows, a data region) may be used for transmission of DL data or UL data. As one example, one slot may correspond to one of the following configurations. Each period is listed in the time order.

1. DL only configuration, 2. UL only configuration, 3. Mixed LTL-DL configuration: 1) DL region + GP (Guard Period) + LTL control region, 2) DL control region + GP + UL region, here, the DL region may be (i) a DL data region, (ii) DL control region + DL data region, the LTL region may be (i) an LTL data region, (ii) LTL data region + UL control region.

In the DL control region, a PDCCH may be transmitted, and in the DL data region, a PDSCH may be transmitted. In the UL control region, a PUCCH may be transmitted, and in the LTL data region, a PUSCH may be transmitted. In the PDCCH, Downlink Control Information (DCI), for example, DL data scheduling information or UL data scheduling information may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a LTE transition from the transmission mode to the reception mode or a process where the gNB and UE transition from the reception mode to the transmission mode. Part of symbols belonging to the occasion in which the mode is changed from DL to UL within a subframe may be configured as the GP.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a primary synchronization signal (PSS), secondary synchronization signal (SSS), and a PBCH associated with demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

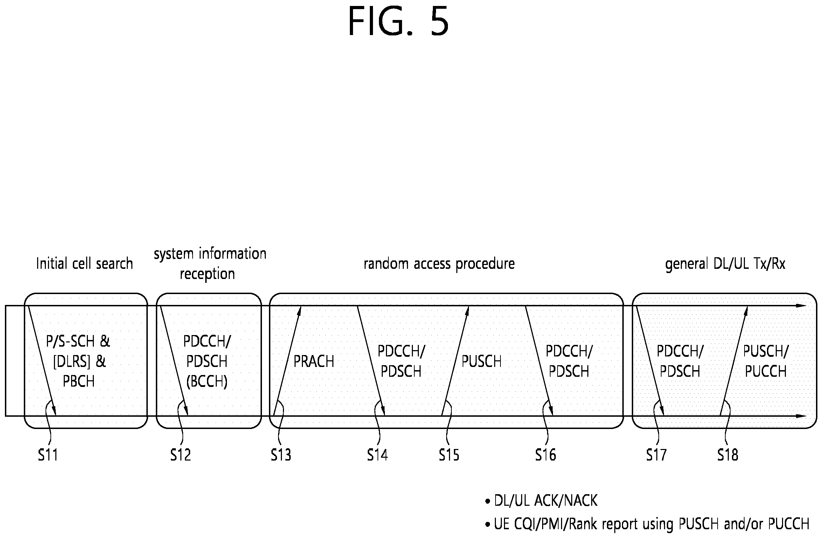

FIG. 5 illustrates physical channels and typical signal transmission.

Referring to FIG. 5, in a wireless communication system, a LTE receives information from a BS through a downlink (DL), and the LTE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

Upon completing the initial cell search, the LTE may receive a physical downlink control channel (PDCCH) and a physical downlink control channel (PDSCH) corresponding thereto to acquire more specific system information (S12).

Thereafter, the LTE may perform a random access procedure to complete an access to the BS (S13 ~ S16). Specifically, the LTE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (S16).

After performing the aforementioned procedure (i.e. initial access procedure), the UE may perform PDCCH/PDSCH reception (S17) and PUSCH/physical uplink control channel (PUCCH) transmission (S18) as a typical uplink/downlink signal transmission procedure. Control information transmitted by the LTE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the LTE may aperiodically transmit the UCI through the PUSCH according to a request/instruction of a network.

In the present disclosure, a mapping method of an uplink channel (e.g., PUSCH) is proposed for coverage enhancement of a LTE.

In the following, the following terms may be used.

IAB node: This may refer to a RAN node that supports wireless access to a LTE and wirelessly backhauls access traffic.

IAB-donor: This may mean a RAN node that provides a UE interface to a core network and a wireless backhaul function to the IAB node.

IAB: Integrated Access and Backhaul, CSI-RS: Channel State Information Reference Signal, DgNB: Donor gNB, AC: Access, BH: Backhaul, DU: Distributed Unit, MT: Mobile terminal, CU: Centralized Unit, IAB-MT: IAB mobile terminal, NGC: Next-Generation Core network, SA: Stand-alone, NSA: non-stand-alone, EPC: Evolved Packet Core.

Coverage is one of the key factors operators consider when commercializing their cellular network, as it directly impacts service quality and capital expenditures (CAPEX) and operating expenditure (OPEX). Although coverage is very important to the success of NR commercialization, a thorough coverage evaluation and comparison with existing RATs that consider all details of NR specifications has not been properly performed.

Compared to LTE, NR is designed to operate at much higher frequencies such as 28 GHz or 39 GHz in FR2.

Many countries are also making more spectrum available, such as 3.5 GHz in FR1, which is typically at a higher frequency than LTE or 3G. Due to higher frequencies, radio channels may experience higher path loss, making it more difficult to maintain adequate quality of service, at least equal to legacy RATs. One major mobile application of particular importance is voice services, where the average subscriber expects ubiquitous coverage at all times, wherever they are.

For FR1, NR can be deployed on newly allocated spectrum such as 3.5 GHz or reestablished spectrum in legacy networks such as 3G and 4G. In either case, coverage will be an issue given the fact that these spectrums will likely handle key mobile services such as voice and low-speed data services.

The following targets can be studied for potential coverage improvements for specific scenarios for both FR1 and FR2.

Urban (outdoor gNB serving indoor terminals) scenarios and rural scenarios (including extreme long-distance rural scenarios) for FR1.

Indoor scenario (indoor gNB serving indoor terminals) and urban/suburban scenario (including outdoor gNB serving outdoor terminals and outdoor gNB serving indoor terminals) for FR2.

TDD and FDD for FR1.

VoIP and eMBB services for FR1.

eMBB service may be the first priority for FR2, and VoIP may be the second priority.

Identification of baseline coverage performance for both DL and UL for the above scenarios and services based on link-level simulation.

UL channels (including PUSCH and PUCCH) may be prioritized over FR1. Performance targets for coverage enhancement can be identified and potential solutions for coverage enhancement for the above scenarios and services can be studied. For example, the target channel may include at least PUSCH/PUCCH. It may be necessary to study advanced solutions such as time domain/frequency domain/DM-RS enhancements (including transmission without DM-RS) and further advanced solutions for FR2. The performance of potential solutions can be evaluated based on link-level simulations.

Based on this discussion, the present disclosure proposes a time resource constituting repeated transmission and a PUSCH mapping method when performing repeated transmission to improve coverage of a UE.

First, PUSCH repetition will be described. PUSCH repetition type A and type B are introduced in NR Rel-15/16, and transmission may be performed as follows according to the PUSCH repetition type.

<PUSCH repetition type A>

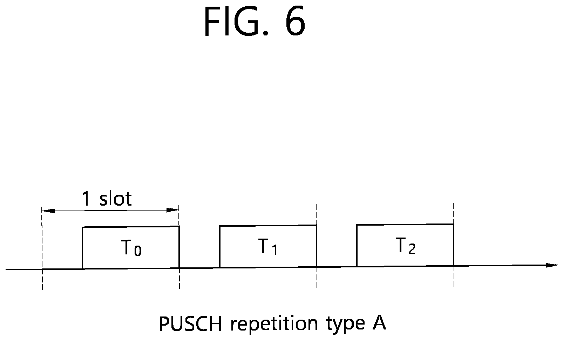

FIG. 6 illustrates PUSCH repetition type A.

Referring to FIG. 6, PUSCH repetition type A is repeated on a slot-by-slot basis, and repetition is performed with the same PUSCH transmission start symbol position and PUSCH transmission symbol length (number of symbols) for each slot. Among PUSCHs transmitted repeatedly, each PUSCH may be referred to as a PUSCH repetition. If there is an invalid symbol that cannot be used for PUSCH transmission among symbol resources constituting a specific PUSCH repetition, transmission of the corresponding PUSCH repetition is dropped and is not performed. For example, when four repeated PUSCH transmissions of Rep0, Rep1, Rep2, and Rep3 are performed, if an invalid symbol is included in symbol resources constituting Rep1, then transmission of Rep1 is dropped, and only transmission of Rep0, Rep2 and Rep3 is performed. Therefore, the actual number of repetitions may be smaller than the set number of repetitions.

For PUSCH repetition type A, frequency hopping may be configured by a higher layer parameter. For example, one of two frequency hopping modes may be set. 1) intra-slot frequency hopping applicable to single-slot and multi-slot PUSCH transmission, 2) inter-slot frequency hopping applicable to multi-slot PUSCH transmission.

<PUSCH repetition type B>

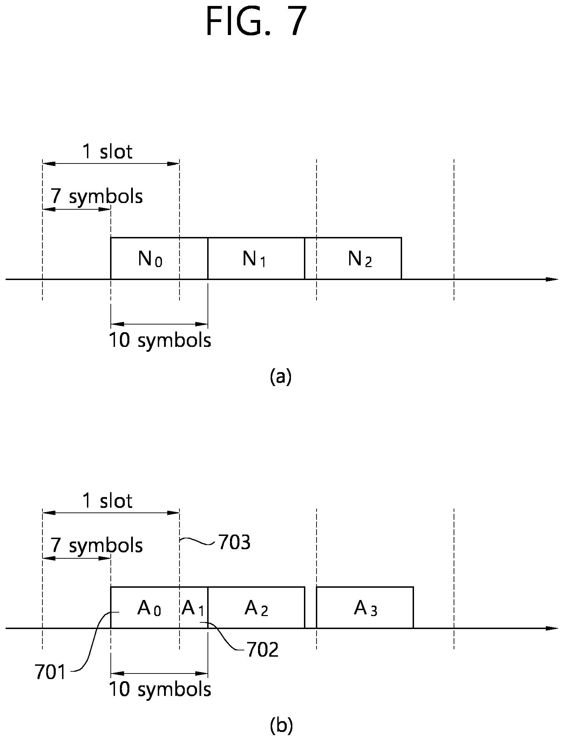

FIG. 7 illustrates PUSCH repetition type B.

In PUSCH repetition type B, repetition is performed in units of symbol lengths (number of symbols) in which PUSCHs are actually transmitted. When each PUSCH is transmitted through 10 symbols as in (a) of FIG. 7, PUSCH repetition is configured in units of 10 consecutive symbols. Repetition that does not consider slot boundaries and invalid symbols, etc. is referred to as nominal repetition.

Nominal repetitions may occur in practice that cannot be performed. In the case of actual PUSCH repetition, it cannot be transmitted on one PUSCH if a slot boundary is included. That is, when PUSCH transmission in a nominal repetition includes a slot boundary, two actual repetitions 701 and 702 are performed based on the slot boundary 703 as shown in (b) of FIG. 7. In addition, one PUSCH transmission can be performed only through consecutive symbols. When an invalid symbol exists in a time resource on which a PUSCH repetition is to be transmitted, actual repetitions are constructed using consecutive symbols bounded by invalid symbols. For example, if symbols #0 to #9 constitute one nominal repetition and symbols #3 to #5 are invalid symbols, symbols #0 to #2 and symbols #6 to #9, excluding invalid symbols, each constitute one actual repetition.

If a symbol (e.g., a DL symbol indicated by DCI format 2_0) that cannot be used for PUSCH transmission is included in one set actual repetition resource, the actual repetition is not transmitted and dropped.

In the case of PUSCH repetition type B, frequency hopping may be configured by a higher layer parameter in the UE. A frequency hopping mode for PUSCH transmission may follow the configuration of an active DCI format. One of the following two frequency hopping modes can be set. 1) frequency hopping between repetitions, 2) frequency hopping between slots.

<DMRS for PDSCH/PUSCH>

The DMRS for the PDSCH/PUSCH may include a front load DMRS and an additional DMRS.

The front load DMRS is explained.

The transmission time resource position of the front load DMRS may be determined by the following factors.

1) The mapping type of the data channel (PDSCH mapping type/PUSCH mapping type) may vary depending on whether it is type A or type B (slot-based or non-slot-based), and the mapping type can be set through RRC.
2) In the case of slot-based transmission, the transmission start OFDM symbol position of the front load DMRS may be the 3rd or 4th OFDM symbol of data transmission resources, and an indication of whether the transmission starting OFDM symbol position is the third OFDM symbol or the fourth OFDM symbol may be transmitted through the PBCH.
3) The front load DMRS can be composed of 1 or 2 consecutive OFDM symbols, and whether the number of OFDM symbols is 1 or 2 can be set through RRC.

The mapping type in the transmission OFDM symbol resource of the front load DMRS can have two types, that is, type 1 or type 2. Information on the applied type may be set through an RRC message. In the case of the type 1, using F-CDM (CDM in frequency domain), T-CDM (CDM in time domain) and/or FDM scheme, 4 or 8 antenna ports can be supported, respectively, depending on whether the DMRS symbol length is 1 or 2. In the case of type 2, 6 or 12 antenna ports can be supported depending on whether the DMRS symbol length is 1 or 2 using F-CDM, T-CDM, and/or FDM scheme.

Additional DMRS will be described.

The number of additional DMRSs may be determined among 0, 1, 2, or 3. The maximum number of additional DMRSs to be transmitted may be set/determined through an RRC message. The number of additional DMRSs actually transmitted and positions of transmission (OFDM) symbols within each maximum number of DMRSs may be determined according to the length (number of symbols) of (OFDM) symbols through which data is transmitted.

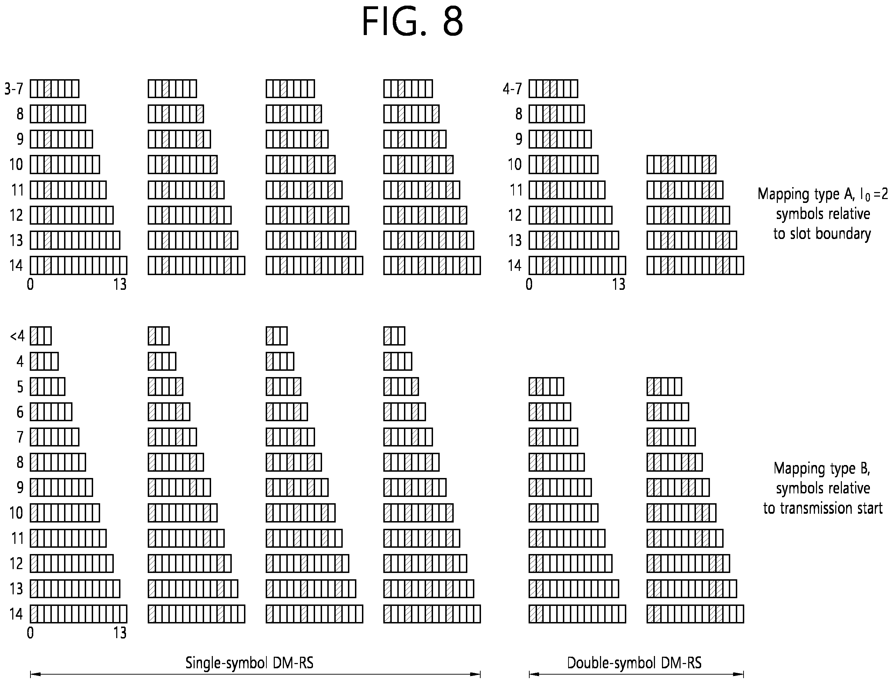

FIG. 8 illustrates the location of symbols of a front load DMRS and an additional DMRS according to data symbol length.

In mapping type A, DMRS symbol(s) are mapped based on slot boundaries. For example, a front load DMRS may be mapped from a symbol having index I=2 (indexing from 0). In mapping type B, DMRS symbol(s) are mapped based on transmission start. For example, if a data channel starts from a symbol with index I=0, a front load DMRS may be mapped to a symbol with index I=0.

The number of OFDM symbols and the mapping type of the additional DMRS may be determined to be the same as, for example, the number of OFDM symbols and the mapping type of the front load DMRS.

The position and number of symbols of the current PUSCH DMRS vary according to the length of symbols through which the PUSCH is transmitted. In particular, when PUSCH repetition type B is used, the position and number of symbols of the DMRS are determined based on the actual repetition length of the PUSCH. In this case, the location of the DMRS may vary for each PUSCH repetition.

The following table is an example of an RRC message used to configure uplink DMRS for PUSCH.

[Table 4]

```
-- ASN1START
-- TAG-DMRS-UPLINKCONFIG-START

DMRS-UplinkConfig ::=              SEQUENCE {
    dmrs-Type                     ENUMERATED {type2}              OPTIONAL,    -- Need S
    dmrs-AdditionalPosition       ENUMERATED {pos0, pos1, pos3}   OPTIONAL,    -- Need S
    phaseTrackingRS               SetupRelease { PTRS-UplinkConfig }  OPTIONAL,    -- Need M
    max 길이]                      ENUMERATED {len2}               OPTIONAL,    -- Need S
    transformPrecodingDisabled    SEQUENCE {
        scramblingID0                 INTEGER (0..65535)          OPTIONAL,    -- Need S
        scramblingID1                 INTEGER (0..65535)          OPTIONAL,    -- Need S

        ...,
        [[
        dmrs-Uplink-r16               ENUMERATED {enabled}        OPTIONAL     -- Need R
        ]]
    }                                                             OPTIONAL,    -- Need R
    transformPrecodingEnabled     SEQUENCE {
        nPUSCH-Identity               INTEGER(0..1007)            OPTIONAL,    -- Need S
        sequenceGroupHopping          ENUMERATED {disabled}       OPTIONAL,    -- Need S
        sequenceHopping               ENUMERATED {enabled}        OPTIONAL,    -- Need S
```

```
        ...,
        [[
        dmrs-UplinkTransformPrecoding-r16   SetupRelease {DMRS-UplinkTransformPrecoding-r16}
OPTIONAL    -- Need M
        ]]                                                        OPTIONAL,    -- Need R
    ...
}

DMRS-UplinkTransformPrecoding-r16  ::=  SEQUENCE {
    pi2BPSK-ScramblingID0             INTEGER(0..65535)           OPTIONAL,    -- Need S
    pi2BPSK-ScramblingID1             INTEGER(0..65535)           OPTIONAL     -- Need S
}

-- TAG-DMRS-UPLINKCONFIG-STOP
-- ASN1STOP
```

In the table above, 'dmrs-AdditionalPosition' represents the position of an additional DM-RS in the UL, and If the field is absent, the LTE can apply the value 'pos2'.

'dmrs-Type' is related to DMRS type selection to be used for UL. If the field is absent, the UE can use DMRS type 1.

'dmrs-Uplink' indicates whether low PAPR DMRS is used.

'dmrs-UplinkTransformPrecoding' indicates whether low PAPR DMRS is used for PUSCH with pi/2 BPSK modulation.

'maxLength' represents the maximum number of OFDM symbols for LTL front load DMRS. If the field is absent, the UE applies the value 'len1'. If set to 'len2', the UE can determine the actual number of DM-RS symbols by the associated DCI.

'nPUSCH-Identity' is related to N_ID^(PUSCH) for DFT-s-OFDM DMRS. If the value is absent or released, the UE may use the physical cell ID (physCellId) value.

'phaseTrackingRS' configures uplink PTRS.

'pi2BPSK-ScramblingID0' and 'pi2BPSK-ScramblingID1' relate to LTL DMRS scrambling initialization for pi/2 BPSK DMRS for PUSCH. When this field is absent, the UE can apply the physical cell ID (physCellId) value of the serving cell.

'scramblingID0' is related to LTL DMRS scrambling initialization for CP-OFDM. When this field is absent, the UE may apply a physical cell ID (physCellId).

'scramblingID1' is related to LTL DMRS scrambling initialization for CP-OFDM. When this field is absent, the UE may apply a physical cell ID (physCellId).

'sequenceGroupHopping': For DMRS transmission with transform precoder the network may configure group hopping by the cell-specific parameter 'groupHoppingEnabledTransformPrecoding' in 'PUSCH-ConfigCommon'. In this case, the network may include this LTE specific field to disable group hopping for PUSCH transmission except for Message 3 (Msg3), i.e., to override the configuration in 'PUSCH-ConfigCommon'. If the field is absent, the LTE uses the same hopping mode as for Msg3.

'sequenceHopping' determines if sequence hopping is enabled for DMRS transmission with transform precoder for PUSCH transmission other than Msg3 (sequence hopping is always disabled for Msg3). If the field is absent, the LTE uses the same hopping mode as for msg3. The network does not configure simultaneous group hopping and sequence hopping.

'transformPrecodingDisabled' are DMRS related parameters for Cyclic Prefix OFDM. 'transformPrecodingEnabled' are DMRS related parameters for DFT-s-OFDM (Transform Precoding).

<RE level combining>

In NR, it may be considered to obtain an energy combining gain by using the same RE mapping between repetitions (e.g., PUSCH repetitions) for coverage enhancement. In this case, the same coded bit may be transmitted by applying the same redundancy version (RV) value between repetitions.

In the present disclosure, a PUSCH mapping method and a DMRS mapping method considering actual repetitions and DMRS RE/symbol positions are proposed in order to effectively perform RE level combining.

The contents of the present disclosure are described in terms of PUSCH transmission, but are not limited thereto and may be applied to transmission of other channels such as PUCCH, PDSCH, and PDCCH as well as PUSCH.

In the PUSCH repetition operation through the existing PUSCH repetition type B, PUSCH transmission mapping is performed for each actual repetition within a resource constituting the actual repetition. In this case, different RV values may be applied to PUSCH transmissions between different actual repetitions.

One of the following methods may be applied to PUSCH mapping in a symbol through which the PUSCH DMRS is transmitted, depending on circumstances and indications.

Method 1. PUSCH transmission is rate-matched in REs in which a DMRS for demodulation of the corresponding PUSCH is transmitted.

Method 2. PUSCH transmission is rate-matched in all REs within a symbol in which a DMRS for demodulating the corresponding PUSCH is transmitted.

<PUSCH mapping in DMRS symbols>

In order to perform RE level combining for coverage enhancement, it is necessary to keep the same RV value applied during PUSCH mapping for a plurality of actual repetitions.

If the same information is transmitted in the same RE position of the same symbol position between repetitions, combining can be easily performed without the need to calculate the RE position where the same information is transmitted.

For example, the same information may be transmitted to the m-th RE of each n-th symbol between actual repetition 0 and actual repetition 1. In this case, when the DMRS positions are different between repetitions, the same information may not be transmitted to the same RE of the same symbol between repetitions. Therefore, it is necessary to locate the DMRS in the same symbol position between actual repetitions.

Even if DMRS locations between repetitions are different, RE level combining can be easily performed if PUSCH mapping rates are matched in all DMRS symbols.

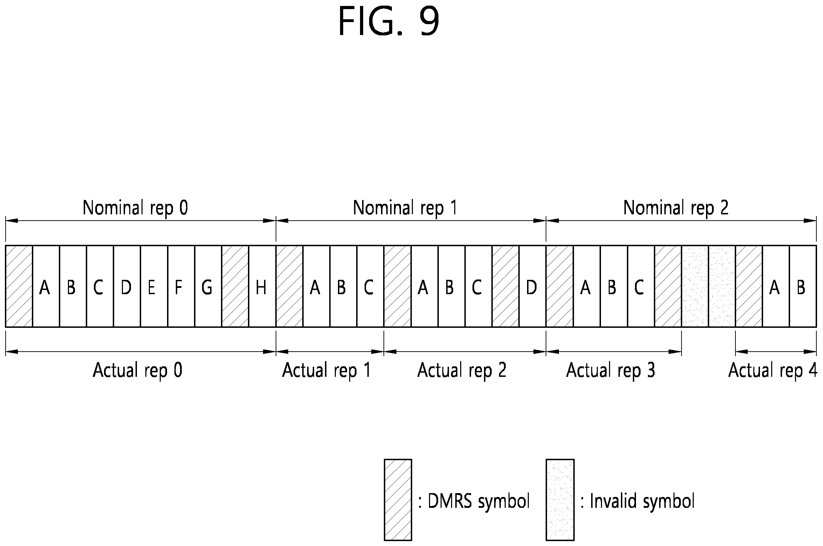

FIG. 9 shows an example in which the number and location of DMRSs between actual repetitions are different when the symbol lengths between actual repetitions are different.

Referring to FIG. 9, actual repetition 0 has a symbol length of 10, actual repetition 1 has a symbol length of 4, actual repetition 2 has a symbol length of 6, actual repetition 3 has a symbol length of 5, and actual repetition 4 has a symbol length of 3. In this case, when a RE resource in which a DMRS is not transmitted is used for PUSCH transmission in a DMRS transmission symbol as in Method 1, the same information may not be transmitted in the same RE of the same symbol between repetitions.

To prevent this problem, PUSCH mapping can be rate-matched in DMRS symbols. That is, in the case of a UE requesting coverage enhancement, PUSCH mapping may be rate-matched in a DMRS symbol for PUSCH transmission. To this end, the network configures the UE to apply method 1 among the method 1 and method 2, or the UE can assume/determine that method 1 is applied without a separate setting. In this case, the UE can improve channel estimation performance by emptying REs in which DMRS is not transmitted in the DMRS symbol and increasing power in DMRS transmission REs instead.

In this case, the same information may be transmitted in the same RE between symbols in the same order for PUSCH symbols excluding DMRS symbols for different PUSCH actual repetitions. Therefore, the gNB can improve PUSCH reception performance by combining symbols in the same order among PUSCH symbols excluding DMRS symbols for different PUSCH actual repetitions.

<PUSCH mapping in actual repetitions>

For RE level combining, the same RV value applied during PUSCH mapping for a plurality of actual repetitions may be maintained and transmitted. In this case, since the symbol length may be different for each actual repetition and the symbol length of the actual repetition may be shorter than the configured PUSCH symbol length, only some of the coded bits to be transmitted are transmitted in some actual repetitions.

For example, in FIG. 9, actual repetition 0 uses 10 symbols to transmit information A to H, whereas actual repetitions 1, 2, 3, and 4 use fewer symbols to transmit some information of A to H. In this case, A is transmitted 5 times, B is 5 times, C is transmitted 4 times, D is transmitted 2 times, and E, F, G, and H are transmitted only once each, for a total of 5 actual repetitions. This method may not achieve the desired performance gain because it does not repeat all bits evenly.

To improve this, PUSCH mapping may be performed as follows.

1) PUSCH mapping method 1

In PUSCH mapping method 1, PUSCH mapping can be rate-matched in DMRS symbols to facilitate RE level combining even if DMRS symbol positions are different between repetitions.

In this case, when there are a plurality of actual repetitions within the same nominal repetition duration, the PUSCH may be continuously mapped to the corresponding plurality of actual repetition resources. That is, for symbols constituting actual repetitions existing within the same nominal repetition duration, PUSCH mapping can be continuously performed even if the symbols belong to different actual repetition resources. To this end, in detail, the LTE may perform PUSCH mapping as follows.

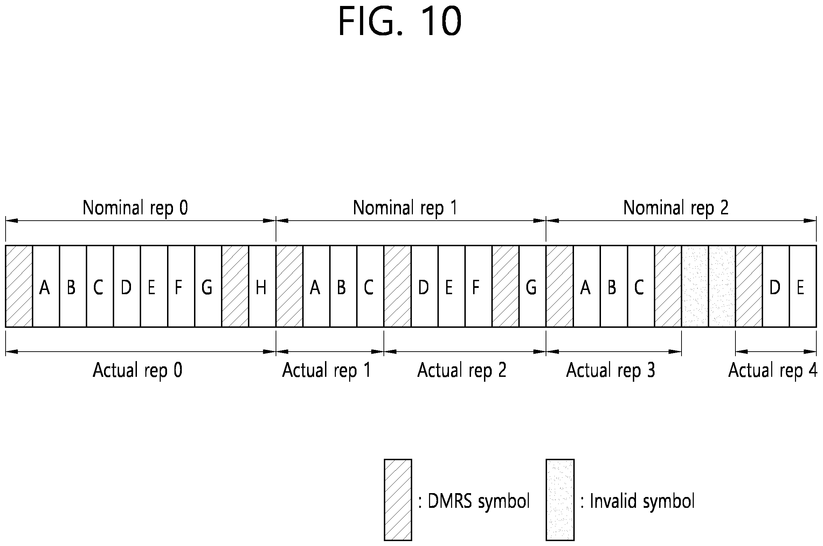

FIG. 10 illustrates an example in which a LTE performs PUSCH TB mapping on resources constituting actual repetitions existing within the same nominal repetition resource.

In FIG. 10, actual repetitions 1 and 2 exist within nominal repetition 1. The UE performs one PUSCH TB mapping by using the resources constituting actual repetitions 1 and 2 together. Within nominal repetition 2, actual repetitions 3 and 4 exist. The LTE performs one PUSCH TB mapping by using the resources constituting actual repetitions 3 and 4 together.

When PUSCH mapping is performed based on the number of symbols constituting nominal repetitions and DMRS mapping, let $s_0$, $s_1$, ..., $s_{N-1}$ denote information mapped to N symbols excluding DMRS symbols among symbols constituting a nominal repetition. In this case, $s_0$, $s_1$, ..., $s_{N-1}$ may be sequentially mapped to symbols excluding DMRS symbols among symbol resources constituting actual repetitions existing in the same nominal repetition resource.

That is, when symbols excluding DMRS symbols among symbol resources constituting actual repetitions existing in the same nominal repetition resource are symbol n, n + 1, ..., n + M-1, $s_0$, $s_1$, ..., $s_{M-1}$ may be mapped to symbols n, n+1, ..., n+M-1, respectively. In this case, it may be M ≤ N. In this case, mapping information mapped to symbol a identically to symbol b may mean that a value transmitted in the same RE position of symbol a is transmitted in each RE of symbol b.

In the example of FIG. 10, the symbol length constituting nominal repetition 0 is 10 symbols, and in this case, there are 2 DMRS symbols. In this case, information of A, B, ..., H may be mapped to 8 symbols excluding the DMRS symbol among the 10 symbols constituting the nominal repetition, respectively. The actual repetition 0 is equal to the symbol length of nominal repetition 0 and A, B, C, ..., H can be mapped in order for 8 symbols excluding the DMRS symbol.

In the case of actual repetitions 1 and 2 which exist within nominal repetition 1 resources, PUSCH mapping is performed on a total of 7 symbols excluding the DMRS symbol among the symbols constituting the two actual repetitions. In this case, information of A, B, C, D, E, F, and G may be sequentially mapped to each symbol. In the case of actual repetitions 3 and 4 which exist within nominal repetition 2 resources, PUSCH mapping is performed on a total of 5 symbols excluding the DMRS symbol among the symbols constituting the two actual repetitions. In this case, information of A, B, C, D, and E may be sequentially mapped to each symbol.

When PUSCH mapping is performed in this way and PUSCH is transmitted, the gNB may perform RE-level combining by combining symbols in which the same information is transmitted for symbol resources constituting different nominal repetitions.

2) PUSCH mapping method 2

PUSCH mapping method 2 equalizes the number and location of DMRS symbols for resources constituting each nominal repetition. Therefore, the amount of resources used for PUSCH transmission within each nominal repetition resource is kept the same as much as possible, and the same information can be mapped to the same RE location between different repetitions even without PUSCH rate matching in all REs of the DMRS symbol.

For this purpose, when PUSCH repetition type B is used, the position of the DMRS symbol in each actual repetition can be determined based on the nominal repetition. In this case, even if the actual repetition is performed based on the actual repetition, the position of the DMRS symbol can be determined based on the nominal repetition resource.

At this time, in order to perform RE-level combining by combining symbols of the same position (order) for symbol resources constituting different nominal repetitions, the UE may perform PUSCH mapping as follows.

The UE may perform PUSCH TB mapping in each nominal repetition resource based on the DMRS position determined based on the symbol resource constituting the nominal repetition resource and the symbol resource of the nominal repetition. In this case, PUSCH mapping may be continuously performed on symbols existing in the same nominal repetition duration even if the symbols belong to different actual repetition resources. At this time, PUSCH mapping is performed on the assumption that all symbols are available for PUSCH transmission, but PUSCH transmission may not be performed on symbols not included in a specific actual repetition.

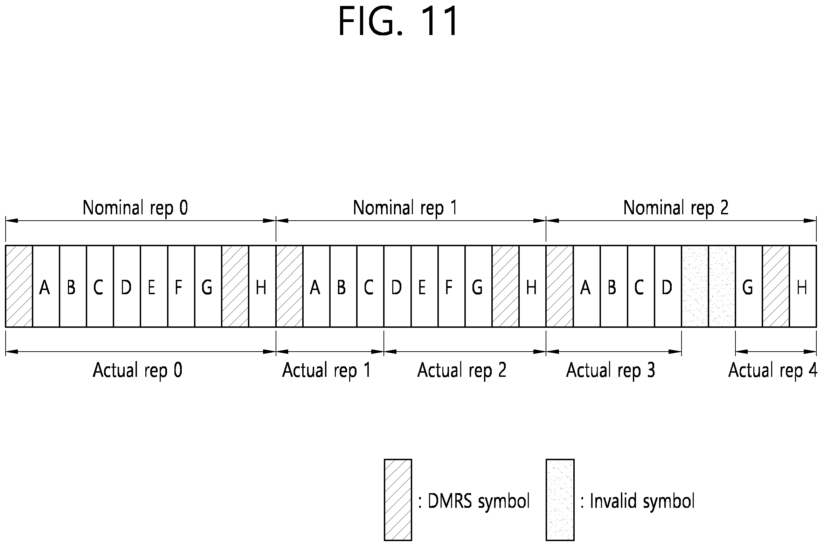

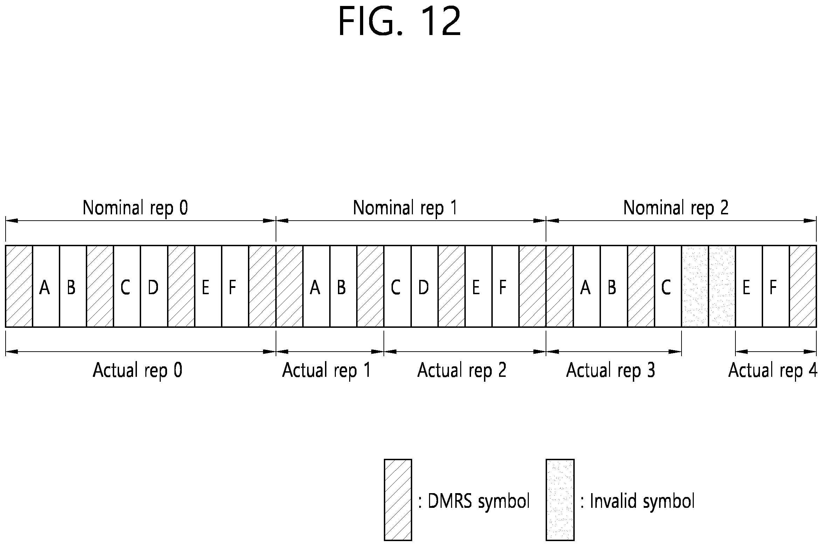

FIG. 11 and 12 are examples in which one PUSCH TB mapping is performed based on symbols constituting one nominal repetition and DMRS resources, and PUSCH transmission is not performed on invalid symbols not included in the actual repetition.

When PUSCH mapping is performed based on the number of symbols constituting nominal repetitions and DMRS mapping, information mapped to N symbols constituting nominal repetitions may be referred to as $s_0$, $s_1$, ..., $s_{N-1}$. At this time, information of $s_0$, $s_1$, ..., $s_{N-1}$ is mapped in order for the symbol resources constituting each nominal repetition, and if a specific symbol is not included in the symbols constituting the actual repetition, PUSCH transmission is not performed on the specific symbol. That is, for M symbol resources constituting actual repetitions existing within the same nominal repetition resource, when the corresponding symbol is located in the i-th position within the nominal repetition duration, $s_i$ information may be mapped to the corresponding symbol. In this case, mapping information mapped to symbol a identically to symbol b may mean that a value transmitted at a RE location of symbol a is transmitted at the same RE location of symbol b.

In the example of FIG. 11, if the symbol length constituting the nominal repetition is 10 symbols and indexing from 0, DMRS is transmitted in symbols 0 and 8 within the nominal repetition duration. Assuming that the PUSCH is mapped to the remaining symbols in order and that the PUSCH is not mapped and rate matched in the DMRS symbol, the information of A, B, ..., H can be mapped to the remaining symbols except for the DMRS symbol, respectively.

Actual repetition 0 is equal to the symbol length of nominal repetition 0, and A, B, C, ..., H can be mapped in order for 8 symbols excluding DMRS symbols. In the case of actual repetitions 1 and 2 existing within the nominal repetition 1 resource, A, B, C, ..., Hare mapped in order for 8 symbols excluding the DMRS symbol among the symbols constituting the nominal repetition 1, and then, PUSCH is transmitted only in the symbols constituting the actual repetition. In the case of actual repetitions 3 and 4 existing within the nominal repetition 2 resource, A, B, C, ..., H are mapped in order for 8 symbols excluding the DMRS symbol among the symbols constituting the nominal repetition 2, and then, PUSCH is transmitted only in the symbols constituting the actual repetition. In the case of the nominal repetition 2 resource, since symbols 5 and 6 are invalid symbols, actual transmission of the PUSCH mapped to the corresponding symbol is not performed (as a result, only A, B, C, D, G, and H are transmitted).

In the example of FIG. 12, if the symbol length constituting the nominal repetition is 10 symbols and indexing is performed from 0, the DMRS is set to be transmitted in symbols 0, 3, 6, and 9 within the nominal repetition duration. Assuming that the PUSCH is mapped to the remaining symbols in order and the PUSCH is not mapped and rate matched in the DMRS symbol, information of A, B, ..., F may be mapped to symbols other than the DMRS symbol, respectively.

Actual repetition 0 is equal to the symbol length of nominal repetition 0, and A, B, C, ..., F can be mapped in order for 6 symbols excluding DMRS symbols. In the case of actual repetitions 1 and 2 existing within the nominal repetition 1 resource, A, B, C, ..., F are mapped in order for 6 symbols excluding the DMRS symbol among the symbols constituting the nominal repetition 1, and then, PUSCH is transmitted only in the symbols constituting the actual repetition. In the case of actual repetitions 3 and 4 existing within the nominal repetition 2 resource, A, B, C, ..., F are mapped in order for 6 symbols excluding the DMRS symbol among the symbols constituting the nominal repetition 2, and then, PUSCH is transmitted only in the symbols constituting the actual repetition. In the case of the nominal repetition 2 resource, since symbols 5 and 6 are invalid symbols, actual transmission of the PUSCH mapped to the corresponding symbol is not performed (as a result, only A, B, C, E, and F are transmitted).

Although the above content has been described based on PUSCH repetition type B, the content of the present disclosure can be applied even when PUSCH transmission is performed using slot-level repetition (PUSCH repetition type A). In this case, the content of the present disclosure may mean a scheme in which PUSCH is mapped within multiple slots in slot-level repetition. In this case, the number of symbols of nominal repetition may mean the number of symbols of multiple slots to which the PUSCH is mapped, and the symbols constituting the actual repetition may mean symbols through which the PUSCH is transmitted in each slot.

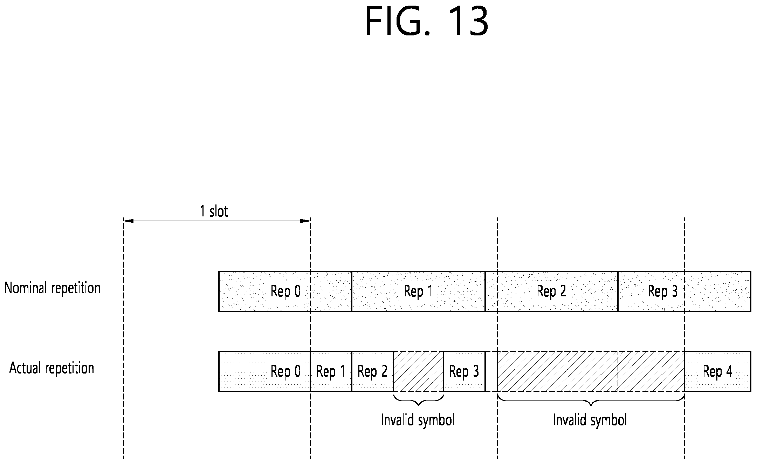

FIG. 13 shows an example of performing PUSCH repetition using PUSCH repetition type B.

Referring to FIG. 13, when PUSCH repetition is performed using PUSCH repetition type B, the symbol length for each actual repetition may vary according to slot boundaries and invalid symbols. In this case, since the determination of the number and position of DMRS symbols is based on the symbol length (number of symbols) of the actual repetition for each actual repetition, the number and position of DMRS symbols may vary for each actual repetition.

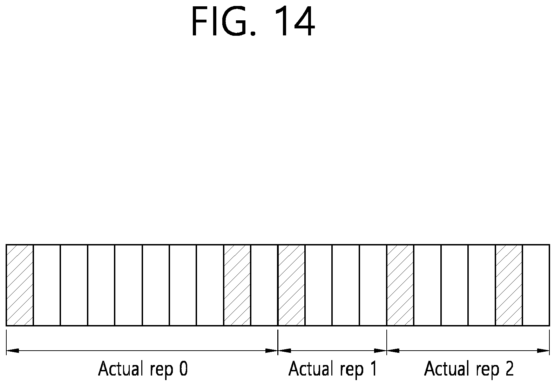

FIG. 14 shows an example in which the number and location of DMRS symbols vary for each actual repetition.

Referring to FIG. 14, actual repetitions 0, 1, and 2 may consist of 10, 4, and 6 symbols, respectively. In this case, when the maximum number of additional DMRSs is set to 1 (i.e., up to 2 DMRS symbols by combining the front load DMRS and the additional DMRS), the number and location of DMRS symbols may differ for each actual repetition, as shown in FIG. 14. In this case, it is difficult to perform RE level combining by performing the same PUSCH RE mapping for each repetition.

Meanwhile, when PUSCH repetition is performed using PUSCH repetition type A, PUSCH repetition is performed using the same symbol resource for each slot.

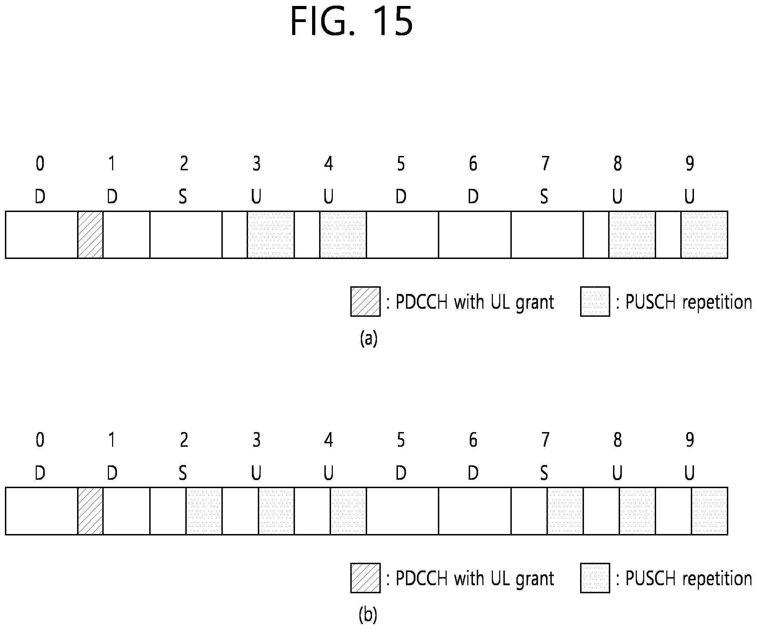

FIG. 15 illustrates examples of PUSCH repetition resources.

In FIG. 15, D denotes a slot composed of downlink symbols, U denotes a slot composed of uplink symbols, and S denotes a slot composed of a mixture of downlink, flexible and/or uplink symbols. In this case, when the LTL grant is transmitted in slot 1, (a) and (b) of FIG. 15 show PUSCH transmission when repeated PUSCH transmission is configured in slot 3 and slot 2, respectively.

Specifically, in (a) of FIG. 15, the PUSCH is repeated using N symbols per slot starting from slot 3. Since slots 5 and 6 consist of only downlink symbols, PUSCH repetition is not performed, and in slot 7, PUSCH transmission is not performed because there are fewer than N symbols available for PUSCH transmission.

(b) of FIG. 15 shows a case in which PUSCH is repeated using M symbols per slot starting from slot 2. PUSCH is transmitted using some symbols of slots 2 and 7, and slots 3, 4, 8, and 9 are entirely composed of uplink symbols. Since the PUSCH is repeated using the same symbol resource for each slot, it indicates that the PUSCH is transmitted using only some symbols.

In the above examples, more efficient transmission can be performed if uplink resources not used for PUSCH transmission can be used for PUSCH transmission.

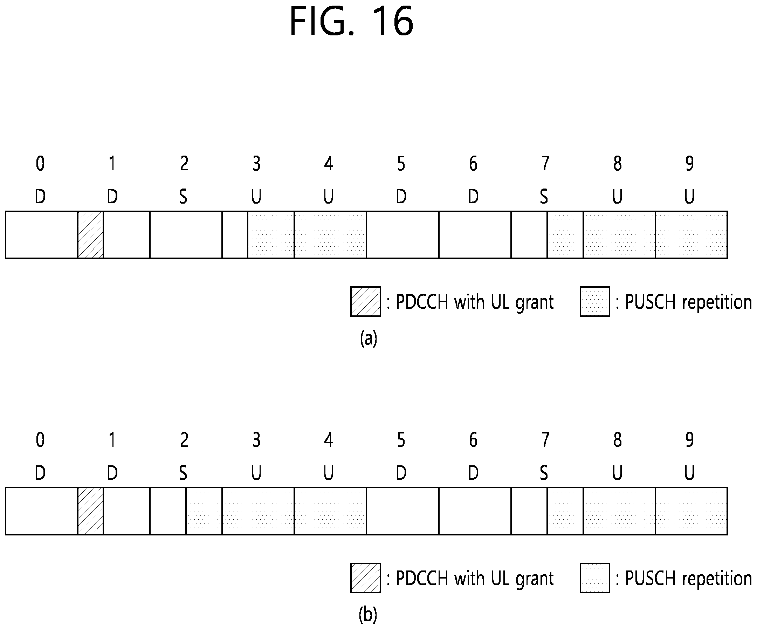

FIG. 16 shows other examples of PUSCH repetition resources.

As shown in (a) of FIG. 16, when repeated PUSCH transmission is scheduled from a specific symbol of slot 3, more efficient PUSCH transmission can be performed if the PUSCH is transmitted using all available uplink resources after the corresponding symbol.

As shown in (b) of FIG. 16, when repeated PUSCH transmission is scheduled from a specific symbol of slot 2, more efficient PUSCH transmission can be performed if the PUSCH is transmitted using all available uplink resources after the corresponding symbol.

As described above, in the case of performing PUSCH repetitions, as shown in FIG. 15, the actual PUSCH transmission symbol length may vary for each PUSCH repetition. In this case, when determining the number and location of DMRS symbols based on the length of a resource in which actual PUSCH repetition is performed for each slot, the number and location of DMRS symbols may be different for each slot. In this case, it is difficult to perform RE level combining by performing the same PUSCH RE mapping for each repetition (for each slot). Hereinafter, in order to solve this problem, a DMRS mapping method for performing the same RE mapping for each PUSCH repetition will be described.

A. A method for determining the number and location of DMRS symbols.

The resource location of the DMRS symbol may be determined according to the 'dmrs-AdditionalPosition' set to RRC in Table 4 and the symbol length through which the PUSCH is transmitted.

In order to perform same RE mapping of the PUSCH for each PUSCH repetition, the same DMRS needs to have the same symbol position for each repetition of PUSCH. To this end, the number of PUSCH transmission symbols used to determine the number and position of DMRS symbols is defined independently of the number of actual PUSCH transmission symbols, so that the same number and position of DMRS symbols can be obtained for each PUSCH repetition. At this time, for convenience of description, the symbol length of actual PUSCH repetition resources is referred to as 'PUSCH symbol length', and the number of PUSCH transmission symbols used to determine the number and position of DMRS symbols is 'PUSCH symbol length for DMRS'. In this case, in detail, 'PUSCH symbol length for DMRS' may be determined as follows.

Method 1.

A PUSCH symbol length set by RRC/DCI (e.g., determined based on time domain resource assignment instructed through DCI) may be 'PUSCH symbol length for DMRS'. Alternatively, the 'DMRS-UplinkConfig' may include a field informing 'PUSCH symbol length for DMRS' to be applied to PUSCH repetition.

Using this method, when PUSCH repetition is performed by applying PUSCH repetition type B, even if the symbol length is different for each actual repetition, the number and position of DMRS symbols of each actual PUSCH repetition can be determined based on the PUSCH symbol length indicated by DCI (i.e., the PUSCH symbol length based on the nominal repetition).

Method 2.

The number of symbols constituting one slot (e.g., 14 symbols) may be 'PUSCH symbol length for DMRS'. When this method is used, the number and location of DMRSs are always determined based on the number of symbols constituting one slot regardless of the transmission symbol length of the PUSCH. Therefore, the same number and location of DMRS symbols can be provided for each PUSCH repetition.

B. DMRS symbol mapping method

When the number and position of DMRS symbols are determined using the method A above, since the symbol length for determining the position of the DMRS symbol is different from the length of the symbol through which the actual PUSCH is transmitted, it is necessary to define a method for determining the position of the DMRS symbol within the symbol through which the PUSCH is transmitted. To this end, at least one of the following methods may be applied.

Method a.

A location of a DMRS symbol in a corresponding PUSCH repetition may be determined based on a transmission start symbol of each PUSCH repetition.

In this case, the symbol index where the actual DMRS is located may vary according to the position of the PUSCH transmission start symbol. For example, when the positions of DMRS symbols are assumed to be a1 and a2, and PUSCH transmission starts from symbol #n, the actual DMRS symbols become symbols #n+a1 and #n+a2. At this time, if the symbol position where the DMRS should be located is not included in the PUSCH transmission resource (that is, when the position of the DMRS symbol is #n + a, if the symbol is located outside the symbols constituting the corresponding PUSCH transmission (PUSCH repetition) or is an invalid symbol for PUSCH transmission, that is, when the position of the DMRS symbol is #n + a, if the symbol is located outside the symbol constituting the corresponding PUSCH transmission (PUSCH repetition)), DMRS transmission is not performed in the corresponding symbol.

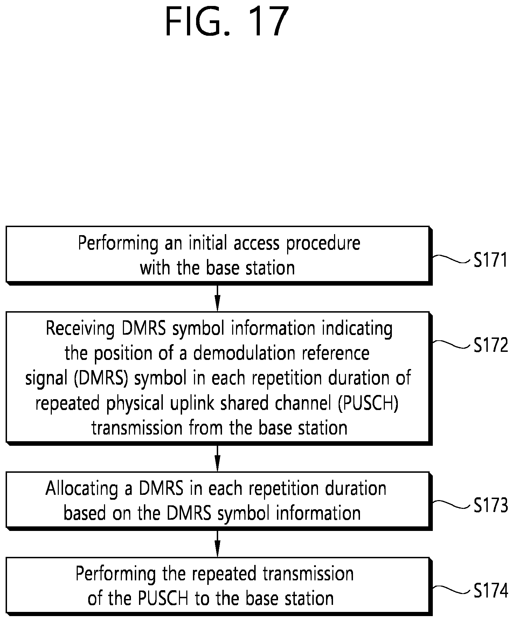

FIG. 17 illustrates a method of operating a UE in a wireless communication system according to an embodiment of the present disclosure.

The UE performs an initial access procedure with the base station (S 171). Thereafter, the LTE receives DMRS symbol information indicating the position of a demodulation reference signal (DMRS) symbol in each repetition duration of repeated physical uplink shared channel (PUSCH) transmission from the base station (S172).

The UE allocates a DMRS in each repetition duration based on the DMRS symbol information (S 173). The UE performs the repeated transmission of the PUSCH to the base station (S174).

The DMRS symbol information may inform the location of a DMRS symbol based on a PUSCH transmission start symbol of each repetition duration.

For example, the UE receives information indicating the symbol length of the first PUSCH included in the repeated PUSCH transmission through downlink control information (DCI), and a location of a DMRS symbol for the first PUSCH may be determined based on the symbol length for the first PUSCH and the DMRS symbol information. More specifically, the PUSCH symbol length determined based on the time domain resource assignment indicated through the DCI becomes the 'PUSCH symbol length for DMRS'.

If the position of the DMRS symbol indicated by the DMRS symbol information is not included in the transmission resource identified by the symbol length for the first PUSCH, the DMRS may not be allocated at the position of the DMRS symbol.

Or, receiving information indicating a symbol length for a second PUSCH included in the repeated PUSCH transmission through a radio resource control (RRC) message, and the location of the DMRS symbol for the second PUSCH may be determined based on the symbol length for the second PUSCH and the DMRS symbol information.

If the location of the DMRS symbol indicated by the DMRS symbol information is not included in the transmission resource identified by the symbol length for the second PUSCH, the DMRS may not be allocated at the location of the DMRS symbol.

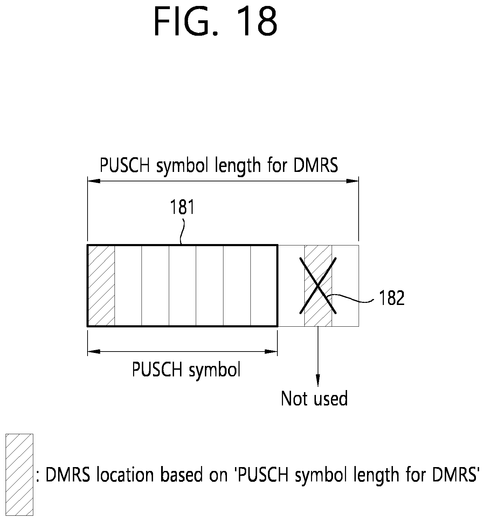

FIG. 18 shows an example of DMRS allocation based on method a.

Referring to FIG. 18, in a certain PUSCH transmission included in repeated PUSCH transmission, the DMRS location is determined according to the DMRS location determined based on the 'PUSCH symbol length for DMRS' from the start symbol of the PUSCH. For example, suppose that 'PUSCH symbol length for DMRS' is set to 10 symbols by DCI or RRC message, and DMRS positions given by DMRS symbol information are a1 = 0 and a2 = 8. Then, symbols separated by a1 = 0 and a2 = 8 from the first symbol of the PUSCH may be determined as DMRS symbols. At this time, the second DMRS symbol 182 may be located outside the PUSCH transmission symbol resource 181. In this case, the UE drops the transmission of the corresponding DMRS 182 and does not perform.

Characteristically, this method may be used together with PUSCH repetition type B and 'Method 1' of section ' A. A method for determining the number and location of DMRS symbols'.

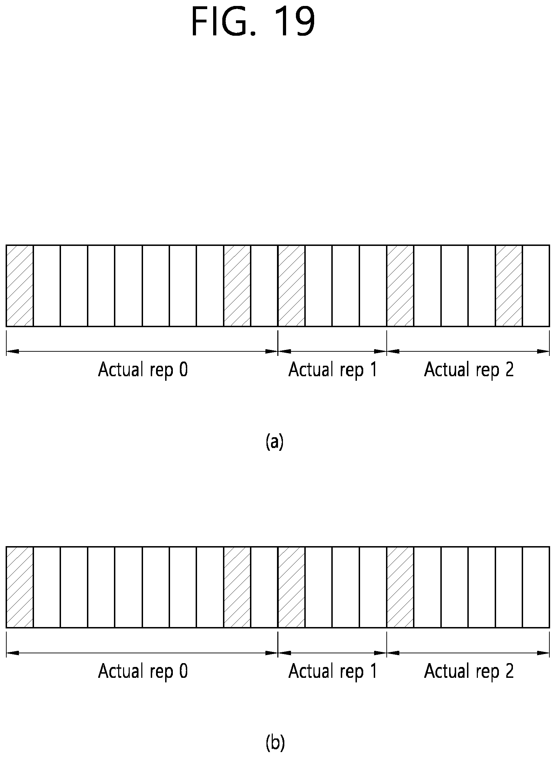

FIG. 19 shows examples of locations of DMRS when PUSCH repetition type B is applied.

In (a) of FIG. 19, an example of a DMRS location of each actual repetition is shown when the existing PUSCH repetition type B is applied. In this case, since the symbol length of each actual repetition is different, the location of the DMRS may be set/allocated differently for each actual repetition. For example, the location of the second DMRS in the actual repetition is located at symbol index 8 in actual repetition 0 (actual rep 0), whereas it is located at symbol index 4 in actual repetition 2 (actual rep 2). That is, there occurs a case where the location of the second DMRS is allocated differently from each other in actual repetitions. In this case, the location of a demodulation reference signal (DMRS) may be different for each PUSCH. Then, the same resource element mapping cannot be used in repeatedly transmitted PUSCHs, and as a result, it is difficult to obtain an energy combining gain by receiving the PUSCHs. It may also be necessary to address this problem in terms of coverage enhancement.

On the other hand, in (b) of FIG. 19, the proposed DMRS location determination method is used. The DMRS resource location of each repetition is determined based on the 10 symbols, which are the length of the PUSCH symbol indicated by the UL grant (DCI), and the DMRS symbol located outside the PUSCH transmission symbol resource is dropped and transmission is not performed. Then, even if the symbol length of each actual repetition is different, the DMRS is located at the same symbol position for each actual repetition resource (if the DMRS is allocated), and the case where (additional) DMRS is located at different positions does not occur. For example, if the location of the second DMRS in the actual repetition is given as a2 = 8, it is located at symbol index 8 in actual repetition 0 (actual rep 0) and dropped in actual repetition 2 (actual rep 2). That is, the case where the location of the second DMRS is allocated differently in actual repetitions does not occur. Therefore, in repeated PUSCH transmission, even if the symbol length (number of symbols) of each PUSCH is different, the location and number of DMRSs can be set/allocated as the same as possible. As a result, it is easy to use the same resource element mapping in repeatedly transmitted PUSCHs and it is easy to obtain an energy combining gain. As a result, it is possible to improve coverage in uplink channel transmission of the UE.

Method b.

When PUSCH repetition type B is used, the position of the DMRS symbol in each actual repetition can be determined based on the nominal repetition. In this case, even if the actual repetition is performed based on the actual repetition, the position of the DMRS symbol can be determined based on the nominal repetition resource.

Accordingly, a symbol index where an actual DMRS is located may be determined according to a symbol position at which nominal repetition starts. For example, when the positions of DMRS symbols are assumed to be a1 and a2, and nominal repetition starts from symbol #n, the actual DMRS symbols become symbols #n+a1 and #n+a2. At this time, if the symbol position where the DMRS is to be located is not included in the PUSCH transmission resource (that is, when the position of the DMRS symbol is #n + a, if the symbol is located outside the symbols constituting the corresponding PUSCH transmission (PUSCH repetition) or is an invalid symbol for PUSCH transmission), DMRS transmission is not performed in the corresponding symbol.

This scheme can be used together with 'Method 1' of the above section ' A. A method for determining the number and location of DMRS symbols'.

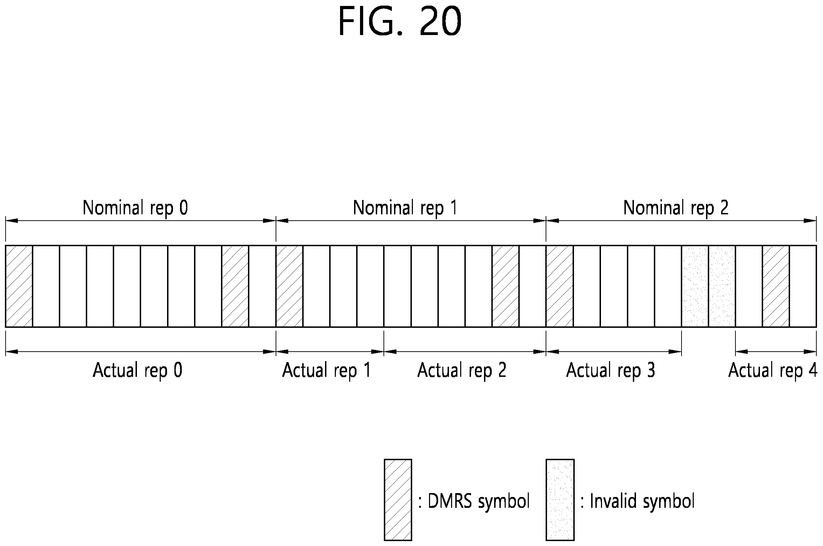

FIG. 20 shows an example in which the DMRS is located at the same symbol position in nominal repetitions.

As shown in FIG. 20, a nominal repetition resource is configured, and one or a plurality of actual repetitions may exist in one nominal repetition resource according to slot boundaries and whether invalid symbols exist. At this time, in terms of DMRS symbol mapping, within resources constituting one nominal repetition, the number and position of DMRS symbols can be determined and decided based on the symbol length of the nominal repetition. In FIG. 20, since one nominal repetition consists of 10 symbols, the position of the DMRS symbol can be determined as a1 = 0 and a2 = 8 accordingly. At this time, among the symbol resources constituting each nominal repetition, a1 = 0 and a2 = 8th symbols become DMRS transmission symbols.

In the case of performing this method, the DMRS is located at the same symbol position for each nominal repetition unit.

Method c.

In method c, the position of the DMRS symbol in each PUSCH repetition can be determined based on the start symbol of the slot. This method may be used together with PUSCH repetition type A (slot-based repetition) and 'Method 2' of the above section ' A. A method for determining the number and location of DMRS symbols'.

Method c can be regarded as a case in which the DMRS symbol information in FIG. 17 informs the position of the DMRS symbol based on the start symbol of the slot. If the location of the DMRS symbol indicated by the DMRS symbol information is not included in the PUSCH transmission resources of each repetition duration, the DMRS may not be allocated at the location of the DMRS symbol.

According to method c, the symbol index in which the DMRS is configured is the same for each slot (for each PUSCH repetition). For example, when the setting positions of DMRS symbols are a1 and a2, the DMRS symbols in each slot are symbols #a1 and #a2. At this time, if the symbol position where the DMRS is to be located is not included in the PUSCH transmission resource (that is, when the position of the DMRS symbol is #a, if the symbol is located outside the symbols constituting the corresponding PUSCH transmission (PUSCH repetition) or is an invalid symbol for PUSCH transmission), DMRS transmission is not performed on the corresponding symbol.

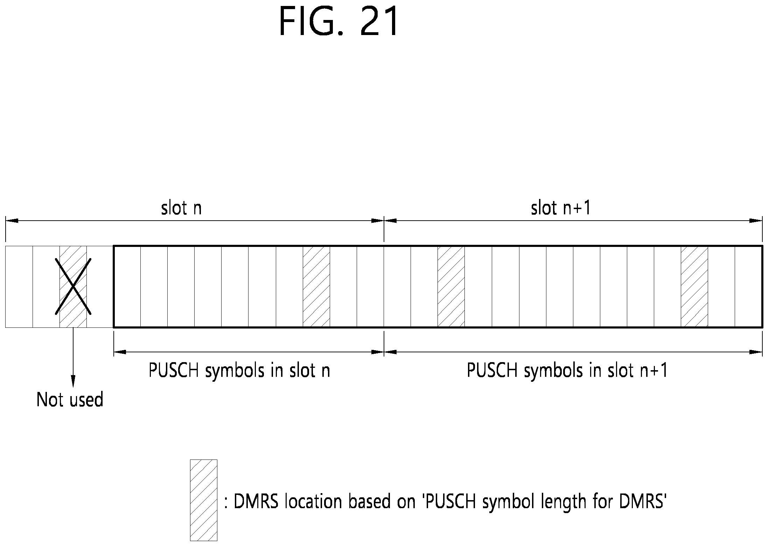

FIG. 21 shows an example of a DMRS location in each PUSCH repetition resource when applying the existing PUSCH repetition type A.

Referring to FIG. 21, 'PUSCH symbol length for DMRS' is 14 symbols, which is the number of symbols constituting one slot. Based on this, the DMRS symbol position is determined based on the start symbol of the slot in each slot. For example, symbols #2 and #11 in each slot can be determined as DMRS symbols. At this time, PUSCH transmission may be performed in symbols #4 to #13 in slot n, and PUSCH transmission may be performed in symbols #0 to #13 in slot n+1. In this case, symbol #2 of slot n, which is not included in the PUSCH transmission resource, is dropped (or punctured) without performing DMRS transmission.

Method d.

A DMRS symbol position in each PUSCH repetition may be determined based on a PUSCH transmission start symbol (or a start symbol of a first repeated PUSCH transmission) indicated by RRC/DCI.

This method may be used together with PUSCH repetition type A (slot-based repetition) and 'Method 2' of the above section 'A. A method for determining the number and location of DMRS symbols'.

In this case, the symbol index at which the DMRS is located is the same for each slot (for each PUSCH repetition). That is, when the PUSCH transmission start symbol indicated by RRC/DCI (or the start symbol of the first repeated PUSCH transmission) is symbol #n and the DMRS symbol positions are a1 and a2, the DMRS symbol in each slot is symbol #n+a1, #n+a2. At this time, if the symbol position where the DMRS is to be located is not included in the PUSCH transmission resource (that is, when the position of the DMRS symbol is #n+a, if the symbol is located outside the symbols constituting the corresponding PUSCH transmission (PUSCH repetition) or is an invalid symbol for PUSCH transmission), the DMRS transmission is not performed in the corresponding symbol.

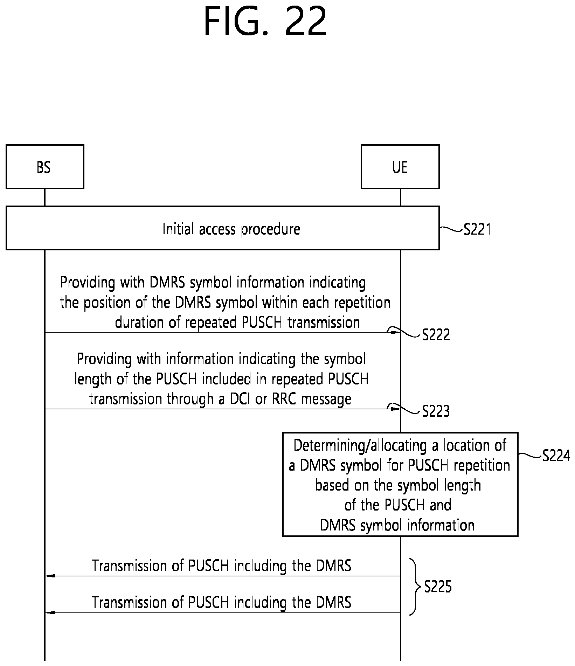

FIG. 22 illustrates a method of operating a base station and a UE related to repeated PUSCH transmission in a wireless communication system.

Referring to FIG. 22, the UE performs an initial access procedure with the base station (S221).

The initial access procedure has already been described above with reference to FIG. 5.

The base station may provide the UE with DMRS symbol information indicating the position of the DMRS symbol within each repetition duration of repeated PUSCH transmission (S222).

The base station may provide the UE with information indicating the symbol length of the PUSCH included in repeated PUSCH transmission through a DCI or RRC message (S223).

The LTE may determine/allocate a location of a DMRS symbol for PUSCH repetition based on the symbol length of the PUSCH and DMRS symbol information (S224). Specific examples thereof have been described with reference to FIGS. 18 to 21.

After that, the LTE performs repeated PUSCH transmission to the base station (S225).

<Full duplex operation for NR>

In 5G, new service types such as extended reality (XR), AI based service, and self-driving car are emerging. These services have characteristics in that traffic dynamically changes in both DL and LTL directions and low latency is required for packet transmission. In 5G service, traffic load will increase explosively to support these various new use cases.

On the other hand, the existing semi-static or dynamic TDD LTL/DL configuration has limitations such as transmission time delay and interference between operators. Existing FDD schemes have limitations in terms of efficient frequency resource utilization for DL/UL directions.

Therefore, introduction of a full duplex operation in a single carrier is being discussed for low latency and efficient resource utilization in NR.

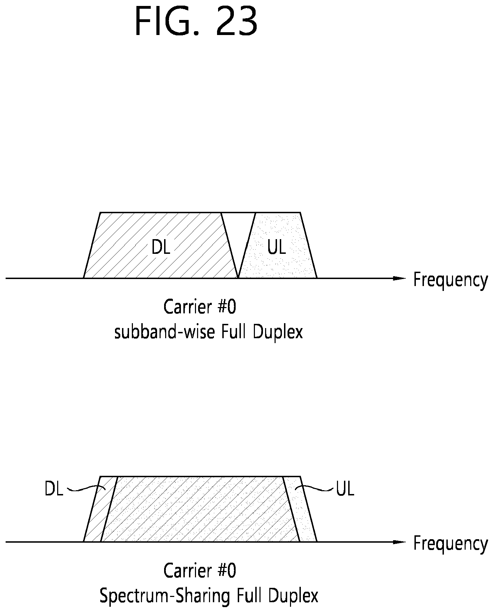

FIG. 23 schematically illustrates an example of SB-FD and SS-FD.

As an example of a method of applying full duplex in an intra-carrier, subband-wise full duplex (SB-FD) and spectrum-sharing full duplex (SS-FD) may be considered as shown in FIG. 23. In the case of SB-FD, transmission and reception of DL and UL are performed using different frequency resources on the same carrier. That is, DL and UL have different frequency resources for the same time resource. In the case of SS-FD, transmission and reception of DL and UL are performed through the same frequency resource or overlapped frequency resources on the same carrier. That is, DL and UL may have the same or overlapping frequency resources for the same time resource.

This full-duplex operation may be used in combination with a conventional half-duplex operation. In the conventional half-duplex-based TDD operation, only some time resources can be used for full-duplex operation. An SB-FD or SS-FD operation may be performed on a time resource for performing a full duplex operation.

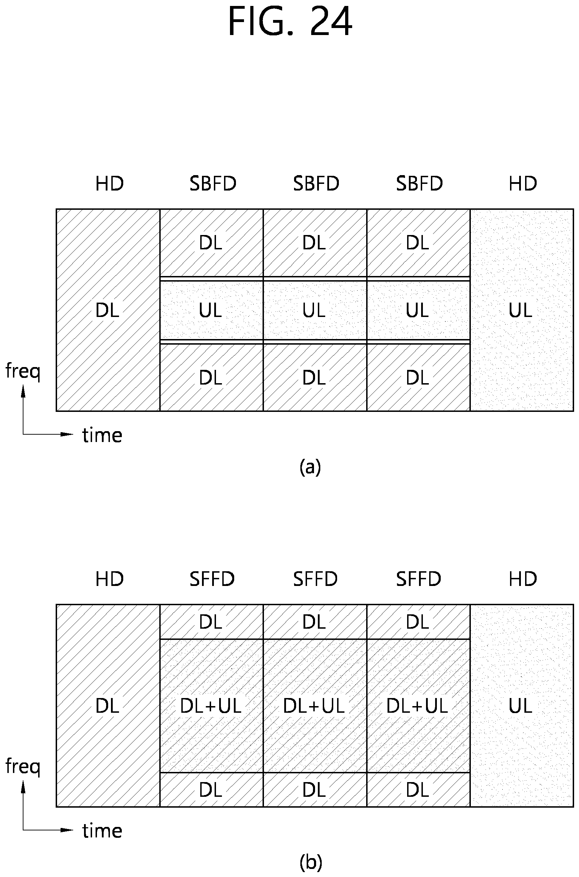

FIG. 24 schematically illustrates an example in which time resources operating in half duplex (HD) and time resources operating in full duplex (FD) such as SB-FD or SS-FD coexist.

In (a) of FIG. 24, some time resources operate in SB-FD and the remaining time resources operate in HD. In (b) of FIG. 24, some time resources operate in SS-FD and the remaining time resources operate in HD. In this case, the unit of time resource may be, for example, a slot or a symbol.

In time resources operating with SB-FD, some frequency resources are used as DL resources and some frequency resources are used as UL resources. Between DL and UL frequency resources, there may be a guard sub-band (or guard frequency resource or guard subcarrier (s)) that is not used in both DL and UL and is left empty. In time resources operating with SF-FD, all frequency resources can be used for both DL and LTL. Alternatively, some frequency resources at one or both ends of the carrier may not be used for DL and/or (and/or) UL to reduce the effect of interference (i.e., adjacent carrier interference (ACI)) from other adjacent carriers. That is, one or both ends of the carrier may be used as a guard band that is not used for both DL and UL. Alternatively, in order to reduce ACI affecting LTL reception, one or both ends of the carrier may be used only for DL transmission.

In this specification, a frequency resource operating in DL among all frequency resources in time resources operating in FD is referred to as a DL sub-band, and a frequency resource operating in LTL is also referred to as a LTL sub-band.

In the case of the full duplex operation as described above, the full duplex operation can be performed both in terms of the gNB and the UE. That is, both the gNB and the UE can simultaneously perform transmission and reception of DL and UL using the same or different frequency resources in the same time resource. On the other hand, only the gNB performs full-duplex operation, and the UE can perform half-duplex operation. The gNB may transmit/receive DL and UL at the same time using the same or different frequency resources in the same time resource, but the LTE performs only DL reception or LTL transmission in a specific time resource. In this case, the gNB performs full duplex operation by performing DL transmission and UL reception with different UEs at the same time.

The content of this specification is generally described on the assumption that a gNB performs a full-duplex operation, but a UE performs a half-duplex operation. However, the content of this specification can be applied even when both the gNB and the LTE perform full duplex operation.

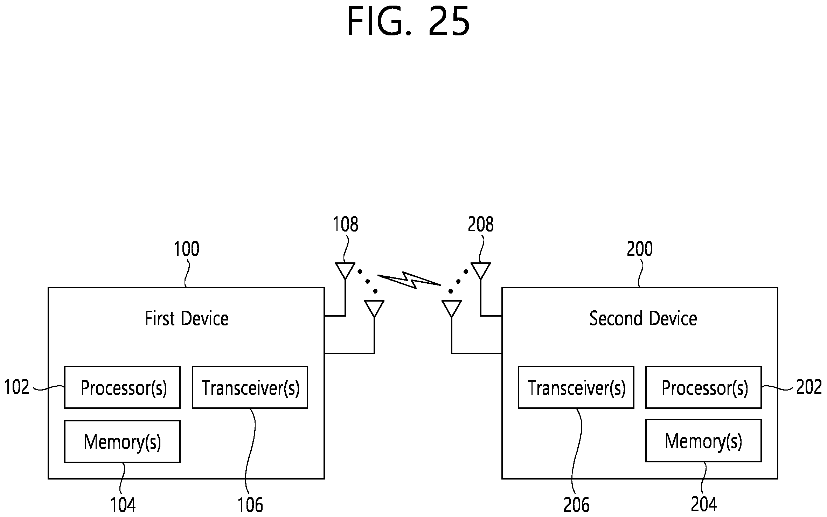

FIG. 25 illustrates a wireless device applicable to this specification.

Referring to FIG. 25, the first wireless device 100 and the second wireless device 200 may transmit/receive wireless signals through various wireless access technologies (e.g., LTE, NR).

The first wireless device 100 includes at least one processor 102 and at least one memory 104 and may further include at least one transceiver 106 and/or at least one antenna 108. The processor 102 may be configured to control the memory 104 and/or the transceiver 106 and to implement the descriptions, functions, procedures, proposals, methods, and/or operational flowcharts disclosed herein. For example, the processor 102 may process information in the memory 104 to generate first information/signal and may then transmit a radio signal including the first information/signal through the transceiver 106. In addition, the processor 102 may receive a radio signal including second information/signal through the transceiver 106 and may store information obtained from signal processing of the second information/signal in the memory 104. The memory 104 may be connected to the processor 102 and may store various pieces of information related to the operation of the processor 102. For example, the memory 104 may store a software code including instructions to perform some or all of processes controlled by the processor 102 or to perform the descriptions, functions, procedures, proposals, methods, and/or operational flowcharts disclosed herein. Here, the processor 102 and the memory 104 may be part of a communication modem/circuit/chip designed to implement a radio communication technology (e.g.,

LTE or NR). The transceiver 106 may be connected with the processor 102 and may transmit and/or receive a radio signal via the at least one antennas 108. The transceiver 106 may include a transmitter and/or a receiver. The transceiver 106 may be replaced with a radio frequency (RF) unit. In this specification, the wireless device may refer to a communication modem/circuit/chip.

The second wireless device 200 includes at least one processor 202 and at least one memory 204 and may further include at least one transceiver 206 and/or at least one antenna 208. The processor 202 may be configured to control the memory 204 and/or the transceiver 206 and to implement the descriptions, functions, procedures, proposals, methods, and/or operational flowcharts disclosed herein. For example, the processor 202 may process information in the memory 204 to generate third information/signal and may then transmit a radio signal including the third information/signal through the transceiver 206. In addition, the processor 202 may receive a radio signal including fourth information/signal through the transceiver 206 and may store information obtained from signal processing of the fourth information/signal in the memory 204. The memory 204 may be connected to the processor 202 and may store various pieces of information related to the operation of the processor 202. For example, the memory 204 may store a software code including instructions to perform some or all of processes controlled by the processor 202 or to perform the descriptions, functions, procedures, proposals, methods, and/or operational flowcharts disclosed herein. Here, the processor 202 and the memory 204 may be part of a communication modem/circuit/chip designed to implement a radio communication technology (e.g., LTE or NR). The transceiver 206 may be connected with the processor 202 and may transmit and/or receive a radio signal via the at least one antennas 208. The transceiver 206 may include a transmitter and/or a receiver. The transceiver 206 may be replaced with an RF unit. In this specification, the wireless device may refer to a communication modem/circuit/chip.

Hereinafter, hardware elements of the wireless devices 100 and 200 are described in detail. At least one protocol layer may be implemented, but limited to, by the at least one processor 102 and 202. For example, the at least one processor 102 and 202 may implement at least one layer (e.g., a functional layer, such as PHY, MAC, RLC, PDCP, RRC, and SDAP layers). The at least one processor 102 and 202 may generate at least one protocol data unit (PDU) and/or at least one service data unit (SDU) according to the descriptions, functions, procedures, proposals, methods, and/or operational flowcharts disclosed herein. The at least one processor 102 and 202 may generate a message, control information, data, or information according to the descriptions, functions, procedures, proposals, methods, and/or operational flowcharts disclosed herein. The at least one processor 102 and 202 may generate a signal (e.g., a baseband signal) including a PDU, an SDU, a message, control information, data, or information according to the functions, procedures, proposals, and/or methods disclosed herein and may provide the signal to the at least one transceiver 106 and 206. The at least one processor 102 and 202 may receive a signal (e.g., a baseband signal) from the at least one transceiver 106 and 206 and may obtain a PDU, an SDU, a message, control information, data, or information according to the descriptions, functions, procedures, proposals, methods, and/or operational flowcharts disclosed herein.

The at least one processor 102 and 202 may be referred to as a controller, a microcontroller, a microprocessor, or a microcomputer. The at least one processor 102 and 202 may be implemented by hardware, firmware, software, or a combination thereof. For example, at least one application-specific integrated circuit (ASIC), at least one digital signal processor (DSP), at least one digital signal processing devices (DSPD), at least one programmable logic devices (PLD), or at least one field programmable gate array (FPGA) may be included in the at least one processor 102 and 202.

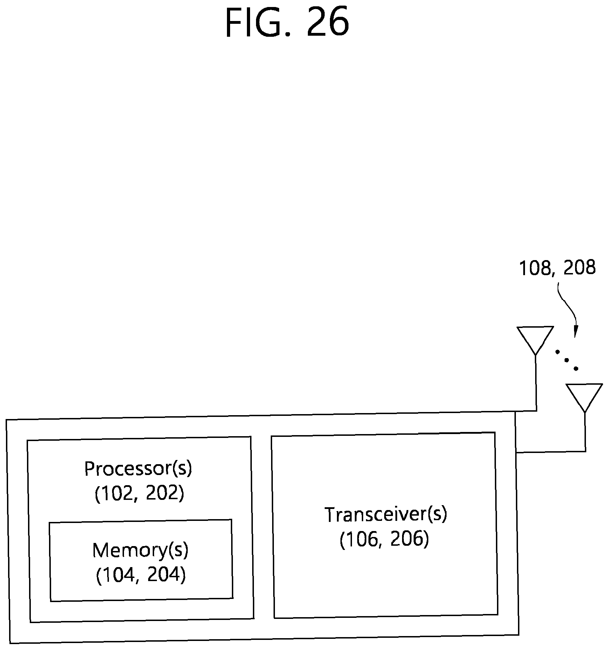

FIG. 26 shows another example of a wireless device.

Referring to FIG. 26, a wireless device may include at least one processor 102, 202, at least one memory 104, 204, at least one transceiver 106, 206, and one or more antennas 108, 208.

The difference between the example of the wireless device described in FIG. 26 and the example of the wireless device in FIG. 25 is that the processors 102 and 202 and the memories 104 and 204 are separated in FIG. 25, but in the example of FIG. 26 the processor 102, 202 includes memory 104, 204. That is, the processor and the memory may constitute one chipset.

The one or more processors 102 and 202 may be implemented as at least one computer readable medium (CRM) including instructions based on being executed by the at least one processor.

That is, at least one computer readable medium (CRM) including instructions based on being executed by at least one processor (processor) can perform, performing an initial access procedure with a base station, receiving, from the base station, demodulation reference signal, DMRS, symbol information informing of a location of a DMRS symbol in each repetition duration of repeated physical uplink shared channel, PUSCH, transmission, allocating a DMRS in the each repetition duration based on the DMRS symbol information, and performing the repeated PUSCH transmission to the base station.

The descriptions, functions, procedures, proposals, methods, and/or operational flowcharts disclosed herein may be implemented using firmware or software, and the firmware or software may be configured to include modules, procedures, functions, and the like. The firmware or software configured to perform the descriptions, functions, procedures, proposals, methods, and/or operational flowcharts disclosed herein may be included in the at least one processor 102 and 202 or may be stored in the at least one memory 104 and 204 and may be executed by the at least one processor 102 and 202. The descriptions, functions, procedures, proposals, methods, and/or operational flowcharts disclosed herein may be implemented in the form of a code, an instruction, and/or a set of instructions using firmware or software.

The at least one memory 104 and 204 may be connected to the at least one processor 102 and 202 and may store various forms of data, signals, messages, information, programs, codes, indications, and/or commands. The at least one memory 104 and 204 may be configured as a ROM, a RAM, an EPROM, a flash memory, a hard drive, a register, a cache memory, a computer-readable storage medium, and/or a combinations thereof. The at least one memory 104 and 204 may be disposed inside and/or outside the at least one processor 102 and 202. In addition, the at least one memory 104 and 204 may be connected to the at least one processor 102 and 202 through various techniques, such as a wired or wireless connection.

The at least one transceiver 106 and 206 may transmit user data, control information, a radio signal/channel, or the like mentioned in the methods and/or operational flowcharts disclosed herein to at least different device. The at least one transceiver 106 and 206 may receive user data, control information, a radio signal/channel, or the like mentioned in the descriptions, functions, procedures, proposals, methods, and/or operational flowcharts disclosed herein from at least one different device. For example, the at least one transceiver 106 and 206 may be connected to the at least one processor 102 and 202 and may transmit and receive a radio signal. For example, the at least one processor 102 and 202 may control the at least one transceiver 106 and 206 to transmit user data, control information, or a radio signal to at least one different device. In addition, the at least one processor 102 and 202 may control the at least one transceiver 106 and 206 to receive user data, control information, or a radio signal from at least one different device. The at least one transceiver 106 and 206 may be connected to the at least one antenna 108 and 208 and may be configured to transmit or receive user data, control information, a radio signal/channel, or the like mentioned in the descriptions, functions, procedures, proposals, methods, and/or operational flowcharts disclosed herein through the at least one antenna 108 and 208. In this document, the at least one antenna may be a plurality of physical antennas or may be a plurality of logical antennas (e.g., antenna ports). The at least one transceiver 106 and 206 may convert a received radio signal/channel from an RF band signal into a baseband signal in order to process received user data, control information, a radio signal/channel, or the like using the at least one processor 102 and 202. The at least one transceiver 106 and 206 may convert user data, control information, a radio signal/channel, or the like, processed using the at least one processor 102 and 202, from a baseband signal to an RF bad signal. To this end, the at least one transceiver 106 and 206 may include an (analog) oscillator and/or a filter.

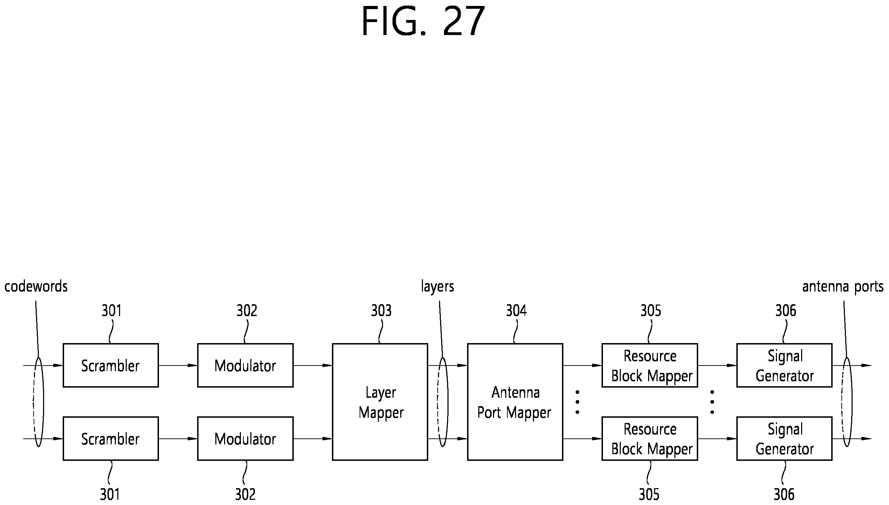

FIG. 27 shows an example of a structure of a signal processing module. Herein, signal processing may be performed in the processors 102 and 202 of FIG. 25.

Referring to FIG. 27, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

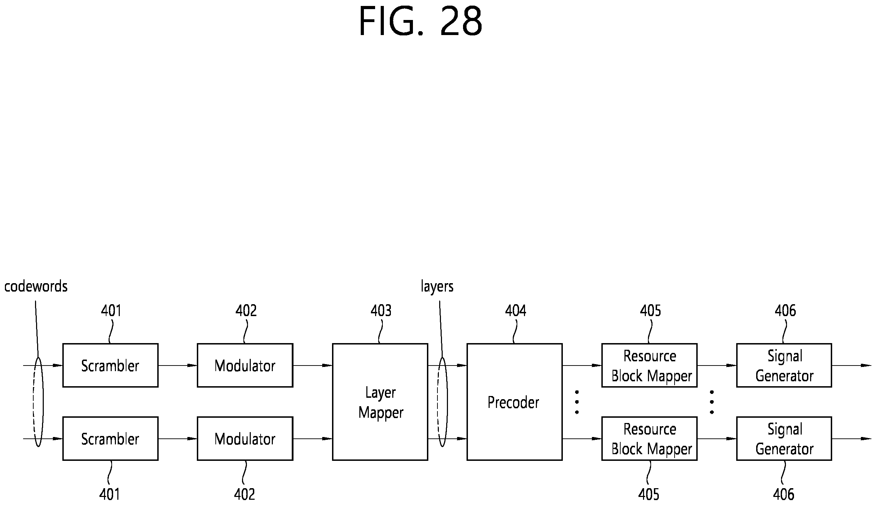

FIG. 28 shows another example of a structure of a signal processing module in a transmitting device. Herein, signal processing may be performed in a processor of a UE/BS, such as the processors 102 and 202 of FIG. 25.

Referring to FIG. 28, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

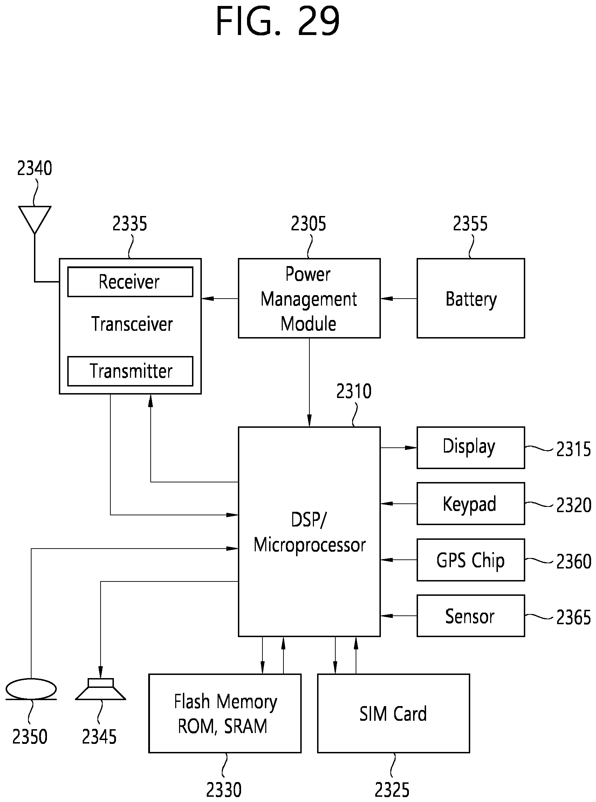

FIG. 29 illustrates an example of a wireless communication device according to an implementation example of the present disclosure.

Referring to FIG. 29, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 29 may be the processors 102 and 202 in FIG. 25.

The memory 2330 is connected to the processor 2310 and stores information related to operations of the processor. The memory may be located inside or outside the processor and connected to the processor through various techniques such as wired connection and wireless connection. The memory 2330 in FIG. 29 may be the memories 104 and 204 in FIG. 25.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 29 may be the transceivers 106 and 206 in FIG. 25.

Although not shown in FIG. 29, various components such as a camera and a universal serial bus (USB) port may be additionally included in the UE. For example, the camera may be connected to the processor 2310.

FIG. 29 is an example of implementation with respect to the LTE and implementation examples of the present disclosure are not limited thereto. The UE need not essentially include all the components shown in FIG. 29. That is, some of the components, for example, the keypad 2320, the GPS chip 2360, the sensor 2365 and the SIM card 2325 may not be essential components. In this case, they may not be included in the UE.

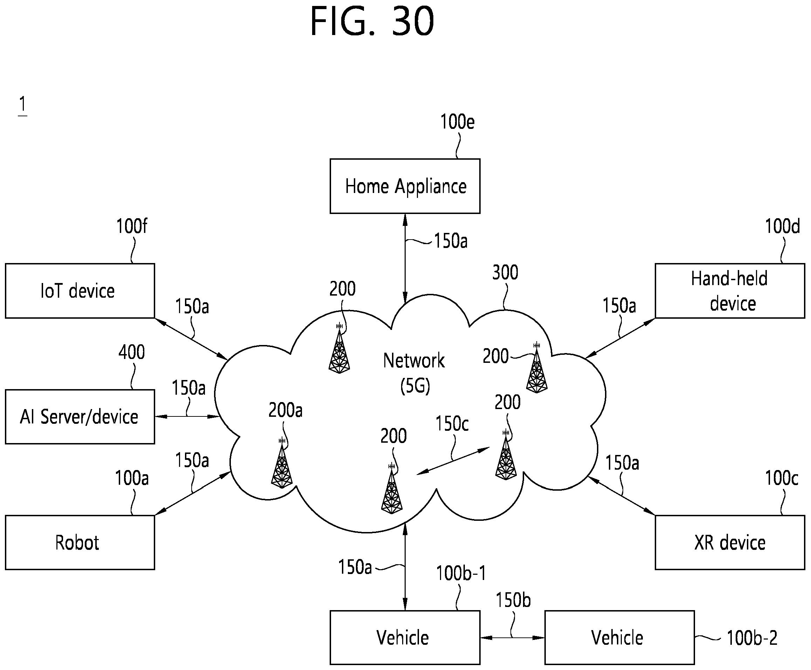

FIG. 30 illustrates a communication system 1 applied to the present specification.

Referring to FIG. 30, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5GNR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

The communication system 1 can operate by NR. NR supports a plurality of numerologies (or a plurality of ranges of subcarrier spacing (SCS)) in order to support a variety of 5G services. For example, when SCS is 15 kHz, a wide area in traditional cellular bands is supported; when SCS is 30 kHz/60 kHz, a dense-urban, lower-latency, and wider-carrier bandwidth is supported; when SCS is 60 kHz or higher, a bandwidth greater than 24.25 GHz is supported to overcome phase noise.

NR frequency bands may be defined as frequency ranges of two types (FR1 and FR2). The values of the frequency ranges may be changed. For example, the frequency ranges of the two types (FR1 and FR2) may be as shown in Table 5. For convenience of description, FR1 of the frequency ranges used for an NR system may refer to a "sub 6 GHz range", and FR2 may refer to an "above 6 GHz range" and may be referred to as a millimeter wave (mmW).

[Table 5]

| Frequency range designation | Corresponding frequency range | Subcarrier spacing |
| --- | --- | --- |
| FR1 | 450 MHz - 6000 MHz | 15, 30, 60 kHz |
| FR2 | 24250 MHz - 52600 MHz | 60, 120, 240 kHz |

As illustrated above, the values of the frequency ranges for the NR system may be changed. For example, FR1 may include a band from 410 MHz to 7125 MHz as shown in Table 6. That is, FR1 may include a frequency band of 6 GHz (or 5850, 5900, 5925 MHz, or the like) or greater. For example, the frequency band of 6 GHz (or 5850, 5900, 5925 MHz, or the like) or greater included in FR1 may include an unlicensed band. The unlicensed bands may be used for a variety of purposes, for example, for vehicular communication (e.g., autonomous driving).

[Table 6]

| Frequency range designation | Corresponding frequency range | Subcarrier spacing |
| --- | --- | --- |
| FR1 | 410 MHz - 7125 MHz | 15, 30, 60 kHz |
| FR2 | 24250 MHz - 52600 MHz | 60, 120, 240 kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1. A method of operating a user equipment, UE, in a wireless communication system, the method comprising:

    performing an initial access procedure with a base station;
    receiving, from the base station, demodulation reference signal, DMRS, symbol information informing of a location of a DMRS symbol in each repetition duration of repeated physical uplink shared channel, PUSCH, transmission;
    allocating a DMRS in the each repetition duration based on the DMRS symbol information; and
    performing the repeated PUSCH transmission to the base station.

2. The method of claim 1, wherein the DMRS symbol information informs of a location of a DMRS symbol based on a PUSCH transmission start symbol of the each repetition duration.

3. The method of claim 1, further comprising:

    receiving information informing of a symbol length for a first PUSCH included in the repeated PUSCH transmission through downlink control information, DCI; and
    determining a location of a DMRS symbol for the first PUSCH based on the symbol length for the first PUSCH and the DMRS symbol information.

**4.** The method of claim 3, wherein based on a location of a DMRS symbol informed by the DMRS symbol information not being included in transmission resources identified by the symbol length for the first PUSCH, a DMRS is not allocated at the location of the DMRS symbol.

**5.** The method of claim 1, further comprising:

receiving information informing of a symbol length for a second PUSCH included in the repeated PUSCH transmission through a radio resource control, RRC, message; and
determining a location of a DMRS symbol for the second PUSCH based on the symbol length for the second PUSCH and the DMRS symbol information.

**6.** The method of claim 5, wherein based on a location of a DMRS symbol informed by the DMRS symbol information not being included in transmission resources identified by the symbol length for the second PUSCH, a DMRS is not allocated at the location of the DMRS symbol.

**7.** The method of claim 1, wherein the DMRS symbol information informs of a location of a DMRS symbol based on a start symbol of a slot.

**8.** The method of claim 7, wherein based on a location of a DMRS symbol informed by the DMRS symbol information not being included in PUSCH transmission resources of the each repetition duration, a DMRS is not allocated at the location of the DMRS symbol.

**9.** A user equipment, UE, comprising:

a transceiver;
at least one memory; and
at least one processor operably coupled with the at least one memory and the transceiver,
wherein the processor is adapted to:

perform an initial access procedure with a base station;
receive, from the base station, demodulation reference signal, DMRS, symbol information informing of a location of a DMRS symbol in each repetition duration of repeated physical uplink shared channel, PUSCH, transmission;
allocate a DMRS in the each repetition duration based on the DMRS symbol information; and
perform the repeated PUSCH transmission to the base station.

**10.** The LTE of claim 9, wherein the DMRS symbol information informs of a location of a DMRS symbol based on a PUSCH transmission start symbol of the each repetition duration.

**11.** The UE of claim 9, further comprising:

receiving information informing of a symbol length for a first PUSCH included in the repeated PUSCH transmission through downlink control information, DCI; and
determining a location of a DMRS symbol for the first PUSCH based on the symbol length for the first PUSCH and the DMRS symbol information.

**12.** The UE of claim 11, wherein based on a location of a DMRS symbol informed by the DMRS symbol information not being included in transmission resources identified by the symbol length for the first PUSCH, a DMRS is not allocated at the location of the DMRS symbol.

**13.** The UE of claim 9, further comprising:

receiving information informing of a symbol length for a second PUSCH included in the repeated PUSCH transmission through a radio resource control, RRC, message; and
determining a location of a DMRS symbol for the second PUSCH based on the symbol length for the second PUSCH and the DMRS symbol information.

**14.** The LTE of claim 13, wherein based on a location of a DMRS symbol informed by the DMRS symbol information not being included in transmission resources identified by the symbol length for the second PUSCH, a DMRS is not allocated at the location of the DMRS symbol.

15. The UE of claim 9, wherein the DMRS symbol information informs of a location of a DMRS symbol based on a start symbol of a slot.

16. The UE of claim 15, wherein based on a location of a DMRS symbol informed by the DMRS symbol information not being included in PUSCH transmission resources of the each repetition duration, a DMRS is not allocated at the location of the DMRS symbol.

17. An apparatus, the apparatus comprising:

at least one memory; and
at least one processor operably coupled with the at least one memory,
wherein the at least one processor is adapted to:

perform an initial access procedure with a base station;
receive, from the base station, demodulation reference signal, DMRS, symbol information informing of a location of a DMRS symbol in each repetition duration of repeated physical uplink shared channel, PUSCH, transmission;
allocate a DMRS in the each repetition duration based on the DMRS symbol information; and
perform the repeated PUSCH transmission to the base station.

18. At least one computer-readable medium (CRM) comprising an instruction based on being executed by at least one processor, wherein the instruction comprises:

performing an initial access procedure with a base station;
receiving, from the base station, demodulation reference signal, DMRS, symbol information informing of a location of a DMRS symbol in each repetition duration of repeated physical uplink shared channel, PUSCH, transmission;
allocating a DMRS in the each repetition duration based on the DMRS symbol information; and
performing the repeated PUSCH transmission to the base station.

19. A method of operating a base station in a wireless communication system, the method comprising:

performing an initial access procedure with a user equipment, UE;
transmitting, to the LTE, demodulation reference signal, DMRS, symbol information informing of a location of a DMRS symbol in each repetition duration of repeated physical uplink shared channel, PUSCH, transmission; and
receiving, from the LTE, the repeated PUSCH transmission including a DMRS allocated in the each repetition duration based on the DMRS symbol information

20. A base station comprising:

a transceiver;
at least one memory; and
at least one processor operably coupled with the at least one memory and the transceiver,
wherein the at least one processor is adapted to:

transmit, to a user equipment, LTE, demodulation reference signal, DMRS, symbol information informing of a location of a DMRS symbol in each repetition duration of repeated physical uplink shared channel, PUSCH, transmission; and
receive, from the UE, the repeated PUSCH transmission including a DMRS allocated in the each repetition duration based on the DMRS symbol information.

# FIG. 1

# FIG. 2

| · · · | One Frame (10ms) | · · · |

| · · · | Half-Frame (5ms) | Half-Frame (5ms) | · · · |

| · · · | Subframe 0 (1ms) | · · · | Subframe 4 (1ms) | Subframe 5 (1ms) | · · · | Subframe 9 (1ms) | · · · |

Subframe (1ms)

**15KHz**

| Slot 0 (14symbols) |

1ms

**30KHz**

| Slot 0 (14symbols) | Slot 1 |

500us

**60KHz**

| Slot 0 (14symbols) | Slot 1 | Slot 2 | Slot 3 |

250us

**120KHz**

| Slot 0 (14symbols) | Slot 1 | Slot 2 | Slot 3 | Slot 4 | Slot 5 | Slot 6 | Slot 7 |

125us

# FIG. 3

Resource grid

A carrier
(up to 3300 subcarriers,
i.e., 275 RBs)

A BWP

1RB=12 subcarriers

1 RE

1subcarrier

1 symbol

1=0 • • •

k=0

EP 4 207 660 A1

# FIG. 4

DL only

UL only

UL control

DL control

Mixed UL-DL

Slot

: DL    : UL

# FIG. 5

Initial cell search | system information reception | random access procedure | general DL/UL Tx/Rx

P/S-SCH & [DLRS] & PBCH | PDCCH/ PDSCH (BCCH) | PRACH | PDCCH/ PDSCH | PUSCH | PDCCH/ PDSCH | PDCCH/ PDSCH | PUSCH/ PUCCH

S11 | S12 | S13 | S14 | S15 | S16 | S17 | S18

• DL/UL ACK/NACK
• UE CQI/PMI/Rank report using PUSCH and/or PUCCH

EP 4 207 660 A1

# FIG. 6

```
  ←――― 1 slot ―――→
  ┌─────────┐        ┌─────────┐        ┌─────────┐
  │   T₀    │        │   T₁    │        │   T₂    │
──┴─────────┴────────┴─────────┴────────┴─────────┴──────────→
```

PUSCH repetition type A

# FIG. 7

(a)

(b)

# FIG. 8

Mapping type A, $l_0 = 2$ symbols relative to slot boundary

Mapping type B, symbols relative to transmission start

Single-symbol DM-RS

Double-symbol DM-RS

EP 4 207 660 A1

# FIG. 9

EP 4 207 660 A1

# FIG. 10

EP 4 207 660 A1

Nominal rep 0 | Nominal rep 1 | Nominal rep 2

| | A | B | C | D | E | F | G | | H | | A | B | C | | D | E | F | | G | | A | B | C | | | | | D | E |

Actual rep 0 | Actual rep 1 | Actual rep 2 | Actual rep 3 | Actual rep 4

: DMRS symbol    : Invalid symbol

# FIG. 11

EP 4 207 660 A1

| Nominal rep 0 | Nominal rep 1 | Nominal rep 2 |

A B C D E F G H  A B C D E F G H  A B C D G H

Actual rep 0  Actual rep 1  Actual rep 2  Actual rep 3  Actual rep 4

: DMRS symbol   : Invalid symbol

# FIG. 12

EP 4 207 660 A1

Nominal rep 0 | Nominal rep 1 | Nominal rep 2

A B | C D | E F | A B | C D | E F | A B | C | E F

Actual rep 0 | Actual rep 1 | Actual rep 2 | Actual rep 3 | Actual rep 4

: DMRS symbol    : Invalid symbol

# FIG. 13

# FIG. 14

Actual rep 0    Actual rep 1    Actual rep 2

# FIG. 15

EP 4 207 660 A1

| 0 | 1 | 2 | 3 | 4 | 5 | 6 | 7 | 8 | 9 |
|---|---|---|---|---|---|---|---|---|---|
| D | D | S | U | U | D | D | S | U | U |

◩ : PDCCH with UL grant        ▦ : PUSCH repetition

(a)

| 0 | 1 | 2 | 3 | 4 | 5 | 6 | 7 | 8 | 9 |
|---|---|---|---|---|---|---|---|---|---|
| D | D | S | U | U | D | D | S | U | U |

◩ : PDCCH with UL grant        ▦ : PUSCH repetition

(b)

# FIG. 16

(a)

: PDCCH with UL grant    : PUSCH repetition

(b)

: PDCCH with UL grant    : PUSCH repetition

EP 4 207 660 A1

# FIG. 17

Performing an initial access procedure
with the base station ~S171

Receiving DMRS symbol information indicating
the position of a demodulation reference
signal (DMRS) symbol in each repetition duration of
repeated physical uplink shared channel (PUSCH)
transmission from the base station ~S172

Allocating a DMRS in each repetition duration
based on the DMRS symbol information ~S173

Performing the repeated transmission
of the PUSCH to the base station ~S174

# FIG. 18

PUSCH symbol length for DMRS

181

182

PUSCH symbol

Not used

: DMRS location based on 'PUSCH symbol length for DMRS'

# FIG. 19

Actual rep 0 | Actual rep 1 | Actual rep 2

(a)

Actual rep 0 | Actual rep 1 | Actual rep 2

(b)

# FIG. 20

EP 4 207 660 A1

# FIG. 21

slot n          slot n+1

Not used

PUSCH symbols in slot n          PUSCH symbols in slot n+1

: DMRS location based on 'PUSCH symbol length for DMRS'

EP 4 207 660 A1

# FIG. 22

```
┌──────┐                                    ┌──────┐
│  BS  │                                    │  UE  │
└──────┘                                    └──────┘
   │                                           │
┌──┴───────────────────────────────────────────┴──┐
│            Initial access procedure              │~S221
└──┬───────────────────────────────────────────┬──┘
   │                                           │
   │  Providing with DMRS symbol information    │
   │  indicating the position of the DMRS       │
   │  symbol within each repetition             │
   │  duration of repeated PUSCH transmission   │~S222
   │──────────────────────────────────────────>│
   │                                           │
   │  Providing with information indicating     │
   │  the symbol length of the PUSCH included   │
   │  in repeated PUSCH transmission through    │
   │  a DCI or RRC message                      │~S223
   │──────────────────────────────────────────>│
```

Determining/allocating a location of a DMRS symbol for PUSCH repetition based on the symbol length of the PUSCH and DMRS symbol information ~S224

Transmission of PUSCH including the DMRS

Transmission of PUSCH including the DMRS ⎫ S225

# FIG. 23

Carrier #0
subband-wise Full Duplex

Carrier #0
Spectrum-Sharing Full Duplex

# FIG. 24

(a)

(b)

# FIG. 25

EP 4 207 660 A1

# FIG. 26

108, 208

Processor(s)
(102, 202)

Memory(s)
(104, 204)

Transceiver(s)
(106, 206)

# FIG. 27

codewords

301 302 303 304 305 306

layers

antenna ports

Scrambler → Modulator → Layer Mapper → Antenna Port Mapper → Resource Block Mapper → Signal Generator

Scrambler → Modulator → Layer Mapper → Antenna Port Mapper → Resource Block Mapper → Signal Generator

301 302 305 306

# FIG. 28

# FIG. 29

2340

2335

2305

2355

Receiver

Transceiver

Transmitter

Power
Management
Module

Battery

2310

Display 2315

Keypad 2320

DSP/
Microprocessor

GPS Chip 2360

Sensor 2365

Flash Memory
ROM, SRAM

SIM Card

2350 2345

2330

2325

# FIG. 30

<u>1</u>

EP 4 207 660 A1

## INTERNATIONAL SEARCH REPORT

International application No.

**PCT/KR2021/011503**

### A. CLASSIFICATION OF SUBJECT MATTER

**H04L 5/00**(2006.01)i; **H04L 1/08**(2006.01)i; **H04L 1/00**(2006.01)i; **H04W 72/04**(2009.01)i; **H04W 72/12**(2009.01)i

According to International Patent Classification (IPC) or to both national classification and IPC

### B. FIELDS SEARCHED

Minimum documentation searched (classification system followed by classification symbols)

H04L 5/00(2006.01); H04L 29/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH, 반복(repetition), 구간(duration), DMRS, 위치(position), DCI, RRC

### C. DOCUMENTS CONSIDERED TO BE RELEVANT

| Category* | Citation of document, with indication, where appropriate, of the relevant passages | Relevant to claim No. |
|---|---|---|
| X | NOKIA et al. Summary #4 of PUSCH enhancements for NR eURLLC (AI 7.2.6.3). R1-1913519, 3GPP TSG-RAN WG1 #99. Reno, USA. 25 November 2019.<br>See pages 1-47. | 1-20 |
| A | LG ELECTRONICS. PUSCH enhancements for NR URLLC. R1-1910828, 3GPP TSG-RAN WG1 #98bis . Chongqing, China. 08 October 2019.<br>See pages 1-15. | 1-20 |
| A | OPPO. PUSCH enhancement for URLLC. R1-2000481, 3GPP TSG-RAN WG1 #100-E. Athens, Greece. 14 February 2020.<br>See pages 1-4. | 1-20 |
| A | MEDIATEK INC. On repetition schemes for NR PUSCH. R1-1912118, 3GPP TSG-RAN WG1 #99. Reno , USA. 09 November 2019.<br>See pages 1-4. | 1-20 |
| A | US 2019-0089504 A1 (LG ELECTRONICS INC.) 21 March 2019 (2019-03-21)<br>See paragraphs [0529]-[0600] and figures 31-32. | 1-20 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 November 2021** | **01 December 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2021/011503**

| Patent document cited in search report | Publication date (day/month/year) | Patent family member(s) | | Publication date (day/month/year) |
|---|---|---|---|---|
| US 2019-0089504 A1 | 21 March 2019 | EP 3429116 | A1 | 16 January 2019 |
| | | EP 3429116 | A4 | 25 September 2019 |
| | | US 10778396 | B2 | 15 September 2020 |
| | | US 10903962 | B2 | 26 January 2021 |
| | | US 2020-0389272 | A1 | 10 December 2020 |
| | | WO 2017-155275 | A1 | 14 September 2017 |

Form PCT/ISA/210 (patent family annex) (July 2019)